# EUROPEAN PATENT APPLICATION

(11) **EP 4 642 104 A1**
(43) Date of publication of application: **29.10.2025**
(21) Application number: 23907790.2
(22) Date of filing: 21.12.2023
(51) Int. Cl.: H04W 52/02, H04W 8/24, H04W 48/16, H04W 76/28, H04W 72/231, H04L 27/02, H04L 27/26

(54) **POWER SAVING METHOD AND DEVICE OF TERMINAL IN WIRELESS COMMUNICATION SYSTEM**

(30) Priority: 21.12.2022 KR 20220181058
(71) Applicant: Electronics and Telecommunications Research Institute, Daejeon 34129 (KR)
(72) Inventor: LEE, Jae Seung, Daejeon 34129 (KR); LEE, Moon Sik, Daejeon 34129 (KR)
(74) Representative: Betten & Resch
(86) International application number: PCT/KR2023/021231
(87) International publication number: WO 2024/136507

(57) **Abstract**

A method of a terminal according to an embodiment disclosed herein may comprise the steps of: turning off a main radio and receiving a WUS for instructing whether to tum on the main radio while a WUR is on; checking whether the WUS includes at least one of a UE ID indicating the terminal or an identifier of a group to which the terminal belongs; and waking up the main radio when the WUS includes the UE ID or the UE group ID.

## Description

### [Technical Field]

The present disclosure relates to a power saving technique in a wireless communication system, and more particularly, to a power saving technique for a terminal in a wireless communication system.

### [Background Art]

The 5G system has been designed and developed for both mobile communication and vertical use cases. In addition to latency, reliability, and availability, energy efficiency of terminals is also crucial in 5G communication. Currently, 5G phones and/or wearable devices may need to be charged daily or every few hours depending on individual usage time. Typically, 5G mobile phones consume tens of milliwatts in a radio resource control (RRC) idle state or RRC inactive state, and hundreds of milliwatts in an RRC connected state. Designs that extend battery life are essential for improving energy efficiency and enhancing user experience. Additionally, there are numerous commercial use cases for IoT or wearable device communication, where long battery life is crucial. For example, long battery life is essential for wireless sensors, communication between a smartphone and a smartwatch, and eHealth-related devices. Furthermore, emergency scenarios, such as fire alarm sensors, require low-latency power-saving techniques.

### [Disclosure]

### [Technical Problem]

The present disclosure is directed to providing a power saving method and apparatus for simultaneously satisfying low-latency and low-power requirements in 5G Advanced or 6G communication.

### [Technical Solution]

A method of a terminal, according to an exemplary embodiment of the present disclosure for achieving the above-described objective, may comprise: receiving a wake-up signal (WUS) indicating whether to turn on a main radio in a state in which the main radio is turned off and a wake-up receiver (WUR) is turned on; identifying whether at least one of a terminal identifier (user equipment (UE) ID) indicating the terminal or a group identifier (UE group ID) of a group to which the terminal belongs is included in the WUS; and waking up the main radio when the UE ID or the UE group ID is included in the WUS,

wherein the WUS may include a first synchronization sequence, a first data payload including at least one of the UE ID or the UE group ID, and a first cyclic redundancy check (CRC) generated using the first data payload.

The UE ID may be one of an inactive radio network temporary identifier (I-RNTI) or a 5G-S-temporary mobile subscription identifier (5G-S-TMSI).

The method may further comprise: receiving, from the base station, a paging early indication (PEI) when the main radio is woken up by the UE group ID; identifying whether paging monitoring of the UE is indicated by the PEI; receiving a paging physical downlink control channel (PDCCH) in a paging occasion when the paging monitoring of the UE is indicated by the PEI; identifying whether the UE ID is included in a paging message decoded from a physical downlink shared channel (PDSCH) scheduled by the paging PDCCH; and in response to that the paging message includes the UE ID and the terminal is in a radio resource control (RRC) idle state, transitioning to an RRC connected state through a random access channel (RACH) procedure and an RRC establishment procedure with the base station.

The method may further comprise: in response to that the paging message includes the UE ID and the terminal is in an RRC inactive state, transitioning to an RRC connected state through a RACH procedure and an RRC resume procedure with the base station.

The method may further comprise: transitioning the main radio to a sleep mode when the paging monitoring of the UE is not indicated by the PEI.

The method may further comprise: in response to the main radio waking up, receiving a synchronization signal block (SSB) from the base station; performing time and frequency synchronization with the base station based on the SSB; and updating system information on the base station based on system information included in the SSB.

The method may further comprise: receiving a SSB from the base station when the main radio wakes up in an RRC idle state according to the UE ID; performing time and frequency synchronization with the base station based on the SSB; updating system information on the base station based on system information included in the SSB; and transitioning to an RRC connected state through a RACH procedure and an RRC establishment procedure with the base station.

The method may further comprise: providing synchronization information for time and frequency synchronization between the base station and the WUR to the main radio after waking up the main radio; and performing communication between the main radio and the base station based on the synchronization information.

The method may further comprise: receiving discontinuous reception (DRX) information of the WUR while the terminal is in an RRC connected state; and turning off the WUR for a predetermined time period based on the DRX information of the WUR while the main radio is in an off state.

The method may further comprise: receiving a beacon frame transmitted by the base station at a preset periodicity; performing time and frequency synchronization between the base station and the WUR based on the received beacon frame; and identifying system information of the base station included in the received beacon frame,

wherein the beacon frame may include a second synchronization sequence, a second data payload, and a second CRC generated using the second data payload, the second data payload including at least one of a cell ID of the base station, synchronization information for time and frequency synchronization between the base station and the WUR, or information related to update of system information on the base station.

The method may further comprise: receiving a beacon frame or discovery frame transmitted by a neighbor cell; and determining whether to reselect a cell based on information included in the beacon frame or discovery frame,
wherein the discovery frame includes cell reselection-related information.

The method may further comprise: receiving a first reference signal (RS) immediately after the main radio wakes up; and performing synchronization between the base station and the main radio based on the first RS.

A method of a base station, according to an exemplary embodiment of the present disclosure for achieving the above-described objective, may comprise: generating a wake-up signal (WUS) to wake up a main radio of a terminal in which the main radio is turned off; and transmitting the WUS to the terminal,
wherein the WUS may include a first synchronization sequence, a first data payload including at least one of a user equipment identifier (UE ID) indicating the terminal or a UE group ID of a group to which the terminal belongs, and a first cyclic redundancy check (CRC) generated using the first data payload.

The UE ID may be one of an inactive radio network temporary identifier (I-RNTI) or a 5G-S-temporary mobile subscription identifier (5G-S-TMSI).

The method may further comprise: transmitting discontinuous reception (DRX) information of the WUR while the terminal is in a radio resource control (RRC) connected state.

The method may further comprise: generating a first reference signal (RS) including synchronization-related information; and transmitting the first RS to the terminal at a preconfigured time immediately after transmitting the WUS.

The method may further comprise: transmitting a beacon frame at a preset periodicity,
wherein the beacon frame includes a second synchronization sequence, a second data payload, and a second CRC generated using the second data payload, the second data payload including at least one of a cell ID of the base station, synchronization information for time and frequency synchronization between the base station and the WUR, or information related to update of system information on the base station.

The information related to update of system information may be version information of the system information.

The method may further comprise: generating a discovery frame including cell reselection-related information; and transmitting the discovery frame,
wherein the cell reselection-related information may include at least one of a cell ID of the base station or information on a minimum quality level of the base station.

A terminal according to an exemplary embodiment of the present disclosure may comprise: a main radio unit for communicating with a base station; a wake-up receiver (WUR) for receiving a wake-up signal (WUS) indicating whether to turn on the main radio; and a processor, and the processor may cause to the terminal to perform:
receiving the WUS through the WUR; identifying whether at least one of a terminal identifier (user equipment (UE) ID) indicating the terminal or a group identifier (UE group ID) of a group to which the terminal belongs is included in the WUS; and waking up the main radio when the UE ID or the UE group ID is included in the WUS,
wherein the WUS may include a first synchronization sequence, a first data payload including at least one of the UE ID or the UE group ID, and a first cyclic redundancy check (CRC) generated using the first data payload, and
the UE ID may be one of an inactive radio network temporary identifier (I-RNTI) or a 5G-S-temporary mobile subscription identifier (5G-S-TMSI).

### [Advantageous Effects]

According to exemplary embodiments of the present disclosure, power-saving methods that simultaneously satisfy low latency and low power consumption in 5G Advanced or 6G communication can be provided. In particular, by using a wake-up radio (WUR) that consumes very little power in addition to a main radio of a UE, the WUR can immediately wake up the main radio to receive data if a transmission occurs from a base station while the main radio is in the off state. Accordingly, using the methods according to the present disclosure, power-saving methods that achieve both low power consumption and low latency simultaneously can be provided.

### [Description of Drawings]

FIG. 1 is a conceptual diagram illustrating an exemplary embodiment of a communication system.
FIG. 2 is a block diagram illustrating an exemplary embodiment of a communication node constituting a communication system.
FIG. 3 is a conceptual diagram illustrating a goal that the WUR discussed in IEEE 802.11ba aims to achieve.
FIG. 4A is a conceptual diagram illustrating a case where the main radio maintains an off state or deep-sleep state when a WUS is not transmitted to the WUR in a power saving operation discussed in a 3GPP work item (WI).
FIG. 4B is a conceptual diagram illustrating a case where the WUR receiving a WUS immediately wake up the main radio and the main radio is turned on in the power saving operation discussed in the 3GPP WI.
FIG. 5 is a conceptual diagram for describing a basic structure of a WUS according to an exemplary embodiment of the present disclosure.
FIG. 6A is a conceptual diagram for describing a data payload received at the WUR 411 when the OOK modulation scheme is applied to the data payload of the WUS without applying encoding such as Manchester code.
FIG. 6B is a conceptual diagram for describing a data payload received at the WUR 411 when encoding such as Manchester code is applied to the data payload.
FIG. 7A is a conceptual diagram of a transmission device for generating and transmitting a synchronization sequence of an MC-OOK signal using an OFDM modem.
FIG. 7B is a conceptual diagram of a transmission device for transmitting the data payload by applying Manchester code to the data payload of a WUS using an OFDM modem.
FIG. 8 is a conceptual diagram for describing an exemplary embodiment of a method for multiplexing WUSs in the 5G NR system.
FIG. 9 is a conceptual diagram for describing a case where a plurality of WUSs are transmitted based on a frequency division multiplexing (FDM) scheme.
FIG. 10A is a conceptual diagram illustrating RRC states in the 5G NR system.
FIG. 10B is a conceptual diagram illustrating RRC states based on WUR mode on/off states according to the present disclosure.
FIG. 11A is a conceptual diagram illustrating a power saving procedure using DRX in the 5G NR system.
FIG. 11B is a conceptual diagram illustrating a power saving procedure using a paging early indication in the 5G NR system.
FIG. 12A is a conceptual diagram illustrating a UE operation procedure when designating target UEs by using a group ID in a WUS.
FIG. 12B is a conceptual diagram illustrating a UE operation procedure when designating target UE(s) by using individual UE ID(s) in a WUS.
FIG. 12C is a conceptual diagram illustrating a WUS-based operation procedure of a UE while the UE is in the RRC connected state.
FIG. 13 is a conceptual diagram illustrating a configuration of a WUR beacon frame format.
FIG. 14 is a conceptual diagram illustrating periodic transmission of a WUR beacon frame.
FIG. 15 is a conceptual diagram illustrating a subheader structure of a MAC CE for a WUS.
FIG. 16 is a conceptual diagram illustrating a structure of a MAC CE format for a WUS according to a first exemplary embodiment of the present disclosure.
FIG. 17 is a conceptual diagram illustrating a structure of a MAC CE format for a WUS according to a second exemplary embodiment of the present disclosure.
FIG. 18 is a conceptual diagram illustrating a format when signaling a WUS through L1 signaling.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

A communication system to which exemplary embodiments according to the present disclosure are applied will be described. The communication system to which the exemplary embodiments according to the present disclosure are applied is not limited to the contents described below, and the exemplary embodiments according to the present disclosure may be applied to various communication systems. Here, the communication system may have the same meaning as a communication network.

Throughout the present disclosure, a network may include, for example, a wireless Internet such as wireless fidelity (WiFi), mobile Internet such as a wireless broadband Internet (WiBro) or a world interoperability for microwave access (WiMax), 2G mobile communication network such as a global system for mobile communication (GSM) or a code division multiple access (CDMA), 3G mobile communication network such as a wideband code division multiple access (WCDMA) or a CDMA2000, 3.5G mobile communication network such as a high speed downlink packet access (HSDPA) or a high speed uplink packet access (HSUPA), 4G mobile communication network such as a long term evolution (LTE) network or an LTE-Advanced network, 5G mobile communication network, or the like.

Throughout the present disclosure, a terminal may refer to a mobile station, mobile terminal, subscriber station, portable subscriber station, user equipment, access terminal, or the like, and may include all or a part of functions of the terminal, mobile station, mobile terminal, subscriber station, mobile subscriber station, user equipment, access terminal, or the like.

Here, a desktop computer, laptop computer, tablet PC, wireless phone, mobile phone, smart phone, smart watch, smart glass, e-book reader, portable multimedia player (PMP), portable game console, navigation device, digital camera, digital multimedia broadcasting (DMB) player, digital audio recorder, digital audio player, digital picture recorder, digital picture player, digital video recorder, digital video player, or the like having communication capability may be used as the terminal.

Throughout the present disclosure, the base station may refer to an access point, radio access station, node B (NB), evolved node B (eNB), base transceiver station, mobile multi-hop relay (MMR)-BS, or the like, and may include all or part of functions of the base station, access point, radio access station, NB, eNB, base transceiver station, MMR-BS, or the like.

Hereinafter, preferred exemplary embodiments of the present disclosure will be described in more detail with reference to the accompanying drawings. In describing the present disclosure, in order to facilitate an overall understanding, the same reference numerals are used for the same elements in the drawings, and redundant descriptions for the same elements are omitted.

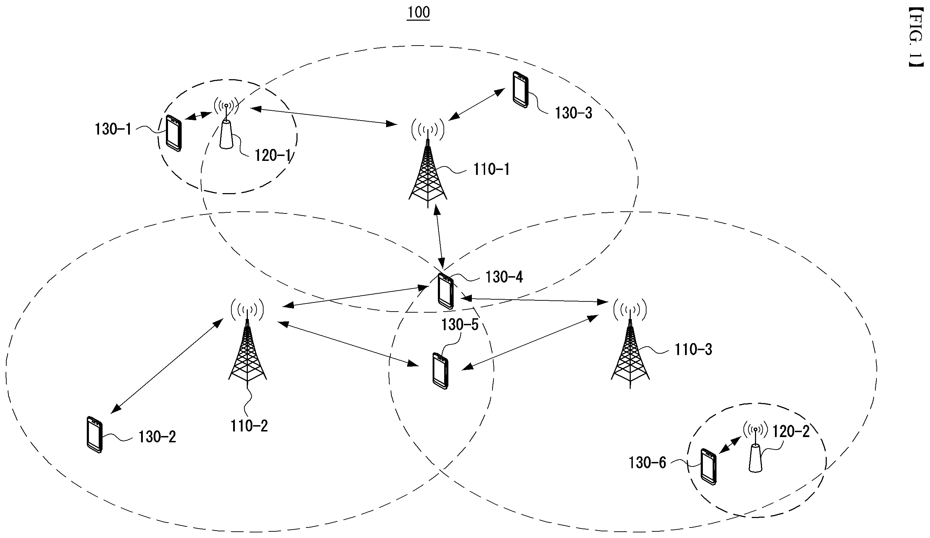

FIG. 1 is a conceptual diagram illustrating an exemplary embodiment of a communication system.

Referring to FIG. 1, a communication system 100 may comprise a plurality of communication nodes 110-1, 110-2, 110-3, 120-1, 120-2, 130-1, 130-2, 130-3, 130-4, 130-5, and 130-6. The plurality of communication nodes may support 4th generation (4G) communication (e.g. long term evolution (LTE), LTE-advanced (LTE-A)), 5th generation (5G) communication (e.g. new radio (NR)), or the like. The 4G communication may be performed in a frequency band of 6 gigahertz (GHz) or below, and the 5G communication may be performed in a frequency band of 6 GHz or above as well as the frequency band of 6 GHz or below.

For example, for the 4G and 5G communications, the plurality of communication nodes may support a code division multiple access (CDMA) based communication protocol, a wideband CDMA (WCDMA) based communication protocol, a time division multiple access (TDMA) based communication protocol, a frequency division multiple access (FDMA) based communication protocol, an orthogonal frequency division multiplexing (OFDM) based communication protocol, a filtered OFDM based communication protocol, a cyclic prefix OFDM (CP-OFDM) based communication protocol, a discrete Fourier transform spread OFDM (DFT-s-OFDM) based communication protocol, an orthogonal frequency division multiple access (OFDMA) based communication protocol, a single carrier FDMA (SC-FDMA) based communication protocol, a non-orthogonal multiple access (NOMA) based communication protocol, a generalized frequency division multiplexing (GFDM) based communication protocol, a filter bank multi-carrier (FBMC) based communication protocol, a universal filtered multi-carrier (UFMC) based communication protocol, a space division multiple access (SDMA) based communication protocol, or the like.

In addition, the communication system 100 may further include a core network. When the communication system 100 supports the 4G communication, the core network may comprise a serving gateway (S-GW), a packet data network (PDN) gateway (P-GW), a mobility management entity (MME), and the like. When the communication system 100 supports the 5G communication, the core network may comprise a user plane function (UPF), a session management function (SMF), an access and mobility management function (AMF), and the like.

Meanwhile, each of the plurality of communication nodes 110-1, 110-2, 110-3, 120-1, 120-2, 130-1, 130-2, 130-3, 130- 4, 130-5, and 130-6 constituting the communication system 100 may have the following structure.

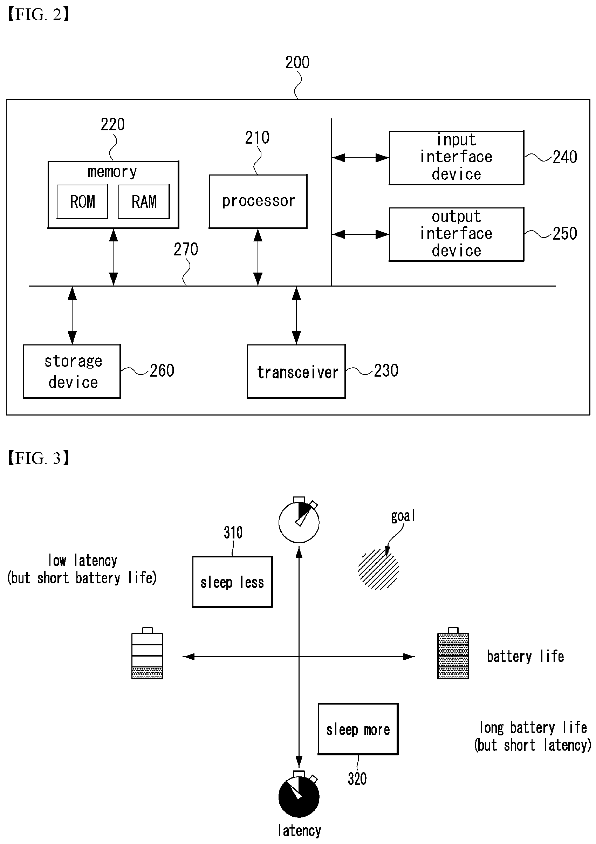

FIG. 2 is a block diagram illustrating an exemplary embodiment of a communication node constituting a communication system.

Referring to FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

However, each component included in the communication node 200 may be connected to the processor 210 via an individual interface or a separate bus, rather than the common bus 270. For example, the processor 210 may be connected to at least one of the memory 220, the transceiver 230, the input interface device 240, the output interface device 250, and the storage device 260 via a dedicated interface.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. The communication system 100 including the base stations 110-1, 110-2, 110-3, 120-1, and 120-2 and the terminals 130-1, 130-2, 130-3, 130-4, 130-5, and 130-6 may be referred to as an 'access network'. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, a evolved Node-B (eNB), a base transceiver station (BTS), a radio base station, a radio transceiver, an access point, an access node, a road side unit (RSU), a radio remote head (RRH), a transmission point (TP), a transmission and reception point (TRP), an eNB, a gNB, or the like.

Here, each of the plurality of terminals 130-1, 130-2, 130-3, 130-4, 130-5, and 130-6 may refer to a user equipment (UE), a terminal, an access terminal, a mobile terminal, a station, a subscriber station, a mobile station, a portable subscriber station, a node, a device, an Internet of things (IoT) device, a mounted apparatus (e.g. a mounted module/device/terminal or an on-board device/terminal, etc.), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support multi-input multi-output (MIMO) transmission (e.g. a single-user MIMO (SU-MIMO), multi-user MIMO (MU-MIMO), massive MIMO, or the like), coordinated multipoint (CoMP) transmission, carrier aggregation (CA) transmission, transmission in an unlicensed band, device-to-device (D2D) communications (or, proximity services (ProSe)), or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2. For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control D2D communications between the fourth terminal 130-4 and the fifth terminal 130-5, and thus the fourth terminal 130-4 and the fifth terminal 130-5 may perform the D2D communications under control of the second base station 110-2 and the third base station 110-3.

Hereinafter, methods for configuring and managing radio interfaces in a communication system will be described. Even when a method (e.g. transmission or reception of a signal) performed at a first communication node among communication nodes is described, the corresponding second communication node may perform a method (e.g. reception or transmission of the signal) corresponding to the method performed at the first communication node. That is, when an operation of a terminal is described, a corresponding base station may perform an operation corresponding to the operation of the terminal. Conversely, when an operation of a base station is described, a corresponding terminal may perform an operation corresponding to the operation of the base station.

Meanwhile, in a communication system, a base station may perform all functions (e.g. remote radio transmission/reception function, baseband processing function, and the like) of a communication protocol. Alternatively, the remote radio transmission/reception function among all the functions of the communication protocol may be performed by a transmission and reception point (TRP) (e.g. flexible (f)-TRP), and the baseband processing function among all the functions of the communication protocol may be performed by a baseband unit (BBU) block. The TRP may be a remote radio head (RRH), radio unit (RU), transmission point (TP), or the like. The BBU block may include at least one BBU or at least one digital unit (DU). The BBU block may be referred to as a 'BBU pool', 'centralized BBU', or the like. The TRP may be connected to the BBU block through a wired fronthaul link or a wireless fronthaul link. The communication system composed of backhaul links and fronthaul links may be as follows. When a functional split scheme of the communication protocol is applied, the TRP may selectively perform some functions of the BBU or some functions of medium access control (MAC)/radio link control (RLC) layers.

Meanwhile, the present disclosure described below will describe a power saving method and device that can simultaneously satisfy low latency and low power in 5G Advanced or 6G communication.

Particularly, in the following description, a separate secondary receiver that consumes very little power in addition to a main receiver (or, main radio) of a terminal will be described. In the following description, it will be described as a wake-up receiver (WUR). The present disclosure provides a power saving method and device that can achieve low power and low latency at the same time by immediately waking up the main receiver to receive data when a transmission occurs from a base station while the main receiver is continuously turned off and the WUR is continuously awake.

A smartphone that supports 5G communication consumes tens of milliwatts in a radio resource control (RRC) idle/inactive state and hundreds of milliwatts in an RRC connected state. The power consumption may be dependent on a wake-up period or paging.

If an extended discontinuous reception (eDRX) cycle is made too long to reduce power consumption, there may be a problem that a latency until data is received becomes too long. In addition, the eDRX often may not be suitable to use cases such as eMBB, a major smartphone service. Therefore, the WUR is needed to simultaneously satisfy ultra-low power and low latency.

FIG. 3 is a conceptual diagram illustrating a goal that the WUR discussed in IEEE 802.11ba aims to achieve.

Referring to FIG. 3, a horizontal axis represents a battery life, and the closer it is to the right, the longer the battery life may be, and the closer it is to the left, the shorter the battery life may be. In addition, a vertical axis represents a latency, and the upward direction may mean a shorter latency, and the downward direction may mean a longer latency.

In FIG. 3, the second quadrant corresponds to a case 310 where there is less sleep, and the fourth quadrant corresponds to a case 320 where there is more sleep. The goal of IEEE 802.11ba is to enable a terminal to operate in the first quadrant with long battery life and low latency characteristics.

As an example of usage according to the present disclosure, when a fire is detected and a fire extinguisher needs to be activated, a firewall needs to be closed and a sprinkler needs to be activated within 1 to 2 seconds after the fire is detected. However, when applying 5G eDRX, a latency is long, so it cannot be applied to the above-described operation. In other words, a technique that can support ultra-low power while supporting a lower latency than eDRX supports is required.

In order to support ultra-low power while satisfying low latency, a WUR is needed which is capable of decoding a wake-up signal (WUS) transmission using a simple modulation scheme and waking up the main radio immediately when receiving the WUS. Further, for ultra-low power energy consumption, a power saving technique is required based on the WUR capable of monitoring the WUS while being always awake and consuming low power by supporting the simple modulation scheme.

The IEEE 802.11ba, illustrated in FIG. 3, has developed a Wake Up Radio standard, but there is a problem that it is difficult to apply to 5G NR communication because it is a technique dependent on the 802.11 protocol in an unlicensed band. Therefore, the present disclosure described below is directed to providing a method of configuring a WUR and a WUS applicable to the 3GPP technology and a device using the same.

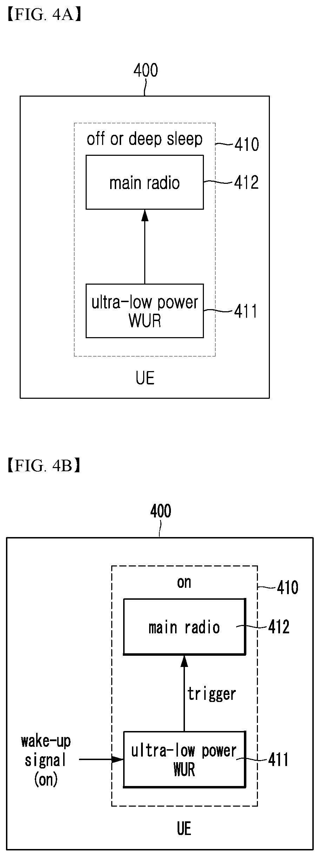

FIG. 4A is a conceptual diagram illustrating a case where the main radio maintains an off state or deep-sleep state when a WUS is not transmitted to the WUR in a power saving operation discussed in a 3GPP work item (WI), and FIG. 4B is a conceptual diagram illustrating a case where the WUR receiving a WUS immediately wakes up the main radio and the main radio is turned on in the power saving operation discussed in the 3GPP WI.

Referring to FIG. 4A, a UE 4010 may include a wireless receiver 410, and the wireless receiver 410 included in the UE 400 may include an ultra-low power wake-up receiver (WUR) 411 and a main radio 412. FIG. 4A illustrates a case in which a WUS is not received. If a WUS is not received, the main radio 412 may remain in the off state or deep sleep state. In this case, the WUR 411, which is a ultra-low power receiver, may remain awake and monitor a WUS.

Referring to FIG. 4B, as in FIG. 4A, the UE 400 may include the wireless receiver 410, and the wireless receiver 410 may include the WUR 411 and the main radio 412. However, FIG. 4B illustrates a case where a WUS is received. When a WUS is received, the WUR 411 may trigger the main radio 412 to transit to an on state. When the WUR 411 triggers the transition to the on state, the main radio 412 may transit to the on state and receive signals from the base station.

It should be noted that FIGS. 4A and 4B illustrate only a portion of the configuration of the UE 400 with the WUR 411 to be described in the present disclosure. In other words, the UE 400 may be a smart phone, wearable device, and/or various sensor device. When the UE 400 is a smart phone, it may further include various types of displays to provide graphic user interfaces (GUIs) to a user, devices for user inputs, and various wireless communication modules and sensors. When the UE 400 is a wearable device, it may be a smart watch, smart glasses, and/or eHealth-related device, and may further include necessary devices according to the respective functions. When the UE 400 is a sensor device, it may include various types of sensors such as fire sensors, rainfall sensors, wind speed sensors, and earthquake detection sensors. The UE 400 may further include additional components for performing operations required for the sensors. However, it should be noted that the fact that a smart phone, wearable device, and/or various sensor device, etc. is configured as the UE 400 means that the UE 400 includes the wireless receiver 410 having ability to communicate with a mobile communication system according to the present disclosure.

The main radio 412 of the UE 400 having the configuration of FIGS. 4A and 4B may remain turned off when a WUS is not received, as illustrated in FIG. 4A. Even when the main radio 412 is in the off state, the WUR 411 may be always turned on and may monitor a WUS received from the base station. When the WUR 411 receives a WUS from the base station, it may immediately wake up the main radio 412, as illustrated in FIG. 4B. In other words, the main radio 412 may be controlled to operate normally. Waking up the main radio 412 may mean that the main radio 412 is in an operating state by being turned on. Therefore, the state in which the main radio 412 is turned off may mean a state in which power is blocked from being supplied to the main radio 412. When main radio 412 wakes up, the main radio 412 may receive signals from the base station.

Accordingly, in a state where the main radio 412 is normally turned off and only the WUR 411 is turned on, the WUR 411 may turn on the main radio 412 only when the UE 400 needs to receive signals, and thus the main radio 412 may be turned on to receive data from the base station. Through this, power consumption of the UE 400 can be reduced.

In the present disclosure described below, methods of operating the WUR 411, methods of generating a WUS, and methods of signaling a WUS will be described as illustrated in FIGS. 4A and 4B. Further, in the following description, the ultra-low power WUR 411 will be referred to as the WUR 411 for convenience of description.

### 1. Structure of wake-up signal

The WUR 411 needs to have a very simple structure and consume very little power. Therefore, it is necessary to design a structure of a WUS that can provide accurate information while satisfying the simple structure and low-power characteristics of the WUR. In the present disclosure, in order to satisfy the above-described characteristics, an on-off keying (OOK) modulation/demodulation scheme or a frequency-shift keying (FSK) modulation/demodulation scheme may be used for the WUS.

The OOK modulation/demodulation scheme may be the simplest type of amplitude-shift keying (ASK) modulation scheme that represents digital data by presence or absence of a carrier wave. The FSK modulation/demodulation scheme may be a frequency modulation scheme that encodes digital information into a carrier signal by periodically shifting a frequency of a carrier wave between several individual frequencies.

As described with reference to FIGS. 4A and 4B, the UE 400 may include the main radio 412 and the WUR 412. In this case, the WUR 412 may be configured to receive only a WUS and to demodulate (and/or decode) the received WUS.

It may be assumed that a base station (e.g. gNB) does not use a separate WUR in order to make full use of the current hardware. However, it should be noted that a newly designed base station may take a form of having the WUR. In the following description, the base station will be described based on an example in which the base station operates without using a separate modem for a WUS in addition to the current hardware configuration. The base station (e.g. gNB) may include an OFDM modem. Therefore, in the present disclosure, the base station may generate a WUS using the OFDM modem. In the present disclosure, this modulation will be referred to as 'multi-carrier (MC)-OOK' or 'MC-FSK'.

In the present disclosure, only some of OFDM subcarriers using a specific numerology may be used and the remaining subcarriers may be made to null subcarriers to generate a narrow band OOK signal. For example, a narrowband signal with a bandwidth of 5 MHz or 20 MHz may be generated and used. The WUS may be transmitted using a single antenna port.

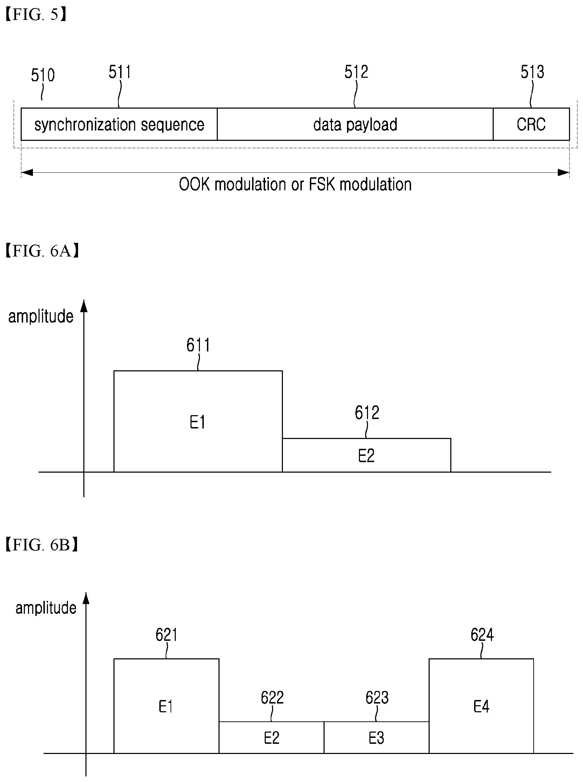

FIG. 5 is a conceptual diagram for describing a basic structure of a WUS according to an exemplary embodiment of the present disclosure.

Referring to FIG. 5, a WUS 510 may include a synchronization sequence field 511, a data payload field 512, and a cyclic redundancy check (CRC) 513 field.

The synchronization sequence field 511 may be a field for packet detection and synchronization of the WUS. The synchronization sequence 511 may use a Zadoff-Chu sequence, M-sequence, or Gold sequence which is widely used in the 3GPP system. It should be noted that the sequences exemplified in the present disclosure are merely examples and exemplary embodiments of the present disclosure are not limited thereto. The synchronization sequence 511 included in the WUS 510 according to the present disclosure may be referred to as a preamble or preamble signal. In other words, the UE may detect the synchronization sequence 511 received from the base station, and use the synchronization sequence 511 not only to acquire synchronization but also to obtain information related to a reception power.

The data payload field 512 may include control information for the WUR and information on target UE(s) that need to be woken up. The information on the target UE(s) may include, for example, at least one of a UE identifier (ID) of a target UE, a UE group ID of a UE group to be woken up, and/or a UE subgroup ID of a UE subgroup to be woken up. The information on the target UE(s) will be described again below. Further, the data payload field 512 may include a cell identifier (cell ID) for identifying a cell and/or information on whether system information (SI) of the base station has been updated.

FIG. 6A is a conceptual diagram for describing a data payload received at the WUR 411 when the OOK modulation scheme is applied to the data payload of the WUS without applying encoding such as Manchester code, and FIG. 6B is a conceptual diagram for describing a data payload received at the WUR 411 when encoding such as Manchester code is applied to the data payload.

Before referring to FIG. 6A, in the OOK modulation scheme, a value of '0' or '1' may be determined based on a signal amplitude. Therefore, when demodulating the received data payload, the WUR 411 may use a preset threshold value to identify whether each bit of the received payload data is '0' or '1'.

Referring to FIG. 6A, an E1 611 and E2 612 are illustrated as an example of the data payload received at the WUR 411. In FIG. 6A, it can be seen that the amplitudes of E1 611 and E2 612 are illustrated as different values. When the preset threshold value is r, if the E1 611 is greater than r, it may be interpreted as '1', and if the E1 611 is less than r, it may be interpreted as '0'. The same scheme may be applied to the E2 612. In other words, if the E2 612 is greater than r, it may be interpreted as '1', and if the E2 612 is less than r, it may be interpreted as '0'. The example in FIG. 6A illustrates a case where the E1 611 is interpreted as '1' and the E2 612 is interpreted as '0'.

As shown in FIG. 6A, in order to interpret each of the E1 611 and E2 612 as '0' or '1', the threshold r needs to be set as described above. The threshold may be set based on a preamble signal, that is, the synchronization sequence 511 illustrated in FIG. 5. For example, the UE may receive the synchronization sequence 511 of the WUS 510 transmitted using the OOK modulation scheme, and detect the received synchronization sequence 511. In this case, the synchronization sequence 511 may be understood as a preamble signal as described above. Accordingly, the UE may estimate a reception signal strength for the detected synchronization sequence 511, and may determine the threshold r based on the reception signal strength of the synchronization sequence 511. Therefore, the WUS transmission scheme using the OOK modulation scheme as illustrated in FIG. 6A may require a procedure for determining the threshold value.

Before referring to FIG. 6B, input and output of Manchester code in case of a spreading factor 2 may be illustrated as shown in Table 1 below.

**[Table 1]**

| Input bit | Coded bits |
|---|---|
| 0 | 10 |
| 1 | 01 |

As shown in Table 1, when an input bit is '0', a result encoded with the Manchester code may be a value of '10', and when an input bit is '1', a result encoded with the Manchester code may be a value of '01'.

As illustrated above, when the data payload 512 of the WUS 510 is transmitted as being encoded with the Manchester code, amplitudes of the E1 621 and E2 622, as shown in FIG. 6B illustrating the data payload received at the WUR 411, may be compared. If the amplitude of the E1 621 is larger than that of the E2 622, they may be decoded as '0'. On the other hand, if an amplitude of an E3 623 is smaller than that of an E4 624, they may be decoded as '1'.

When using the Manchester code illustrated in FIG. 6B, there is an advantage that there is no need to calculate the threshold value as in FIG. 6A. Therefore, detection of the data payload 512 of the WUS 510 may be easier when the Manchester code is applied than when the OOK modulation scheme is used without an encoding process such as the Manchester code. Further, using the Manchester code has an advantage of being simpler to implement than using the OOK scheme without Manchester coding.

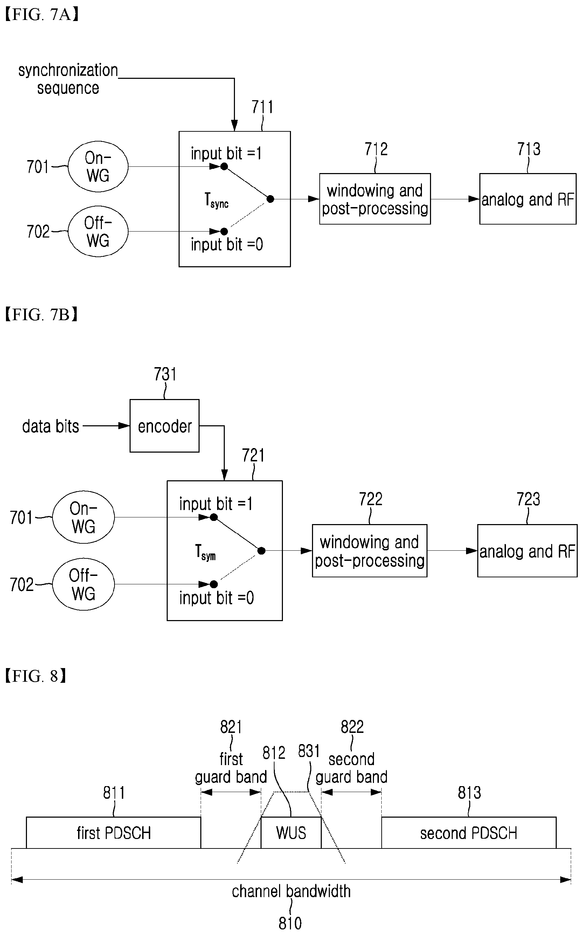

FIG. 7A is a conceptual diagram of a transmission device for generating and transmitting a synchronization sequence of an MC-OOK signal using an OFDM modem.

Referring to FIG. 7A, an 'on' input 701 of a waveform generator (WG) (i.e. On-WG) and an 'off' input 702 of the WG (i.e. 'Off-WG') may be connected to different input terminals (or ports) of a switch 711. The WG may be a waveform generator that generates a narrow band OFDM signal. Therefore, the on input 701 of the WG (i.e. On-WG) may be a terminal (or port) into which a narrow-band OFDM signal generated by the WG is input. For example, the On-WG input 701 may be an OFDM signal using a narrow band such as 5 Mhz, and may be generated using a 5G NR modem currently used in the 5G system. In addition, the off input 702 of the WG (i.e. Off-WG) may be a terminal (or port) to which a signal generated by the WG is not provided. Accordingly, two different input terminals (or ports) of the switch 711 may have the On-WG input 701 to which a narrow-band OFDM signal is input and the Off-WG input 702 to which no signal is input. In other words, the Off-WG input 702 may be an input of a signal with zero energy.

The switching operation of the switch 711 may be performed based on the synchronization sequence 511 described in FIG. 5. Each symbol of the synchronization sequence 511 may have a value of '0' or '1'. Therefore, if a value of the symbol of the synchronization sequence 511 is '0', an output terminal (or port) of the switch 711 is connected to the Off-WG input 702, and if the value of the symbol of the synchronization sequence 511 is '1', the output terminal (or port) of the switch 711 may be connected to the On-WG input 701. In this case, a time during which the input/output terminals are connected is illustrated as Tsync in FIG. 7A. Tsync is a symbol duration of the synchronization sequence, and may be a duration of each bit constituting the synchronization sequence, for example, '0' or '1'.

Based on this, when the input bit of the synchronization sequence 511 is '1', the switch 711 may connect the output terminal (or port) and the On-WG input 701 during a time corresponding to Tsync to output an OFDM signal. On the other hand, if the input bit is '0', a signal with zero energy may be output by connecting the output terminal (or port) and the Off-WG input 702 during the time corresponding to Tsync. In other words, the switch 711 may turn the OFDM signal on/off by connecting the On-WG input 701 or the OFF-WG input 702 to the corresponding output terminal (or port) according to each bit of the synchronization sequence 511.

Connecting the Off-WG input to the output terminal (or port) means nulling the OFDM signal during the symbol duration (i.e. Tsync). The same effect may be achieved by disconnecting the On-WG input from the output terminal (or port) during the symbol duration in which the input is '0' without separately using the Off-WG input.

The output of the switch 711 may be input to a windowing and post-processing unit 712. The windowing and post-processing unit 712 may perform windowing on the narrow band OFDM signal having a form of on/off, and perform post-processing such as smoothing. The signal on which the post-processing operation of the OFDM symbol has been completed may be input to an analog and radio frequency (RF) unit 713. The analog and RF unit 713 may generate an analog signal by performing digital-to-analog conversion (DAC) processing on the post-processed OFDM symbol, and then transmit the analog signal as an RF signal. The RF signal may be an RF signal in a preconfigured band.

FIG. 7B is a conceptual diagram of a transmission device for transmitting the data payload by applying Manchester code to the data payload of a WUS using an OFDM modem.

A difference of a case of FIG. 7B from that of FIG. 7A is that encoding such as Manchester code is applied to input bits of the data.

Referring to FIG. 7B, as described in FIG. 7A, the 'on' input 701 and the 'off' input 702 of the WG may be connected to different input terminals (or ports) of the switch 711. The WG may be a waveform generator that generates a narrow band OFDM signal. The On-WG input 701 may be an OFDM signal using a narrow band such as 5 Mhz, and may be generated using a 5G NR modem currently used in the 5G system. In addition, the off input 702 of the WG (i.e. Off-WG) may be a terminal (or port) to which a signal generated by the WG is not provided. In other words, the Off-WG input 702 may be an input of a signal with zero energy.

The data bits may be information bits included in the data payload 511 of the WUS 510 previously described in FIG. 5. As described above, the data payload 511 may include various types of information, which may be expressed as digital data of '0' or '1'. The data payload 511 may be encoded through an encoding process such as Manchester code, as described in FIG. 6B. The symbols encoded with the Manchester code may be expressed in form of digital data including '0' and '1', as shown in Table 1 above.

Meanwhile, in order to facilitate understanding, the present disclosure will be described assuming that the Manchester code is used as an encoding scheme of an encoder 731. However, it should be noted that the encoder 731 according to the present disclosure is not limited to the Manchester code.

A switch 721 may have the same form as previously described in FIG. 7A. However, while the switching operation of the switch 721 is performed based on the input bits of the synchronization sequence 511 in FIG. 7A, the switching operation of the switch 721 of FIG. 7B may be different from that of FIG. 7A in that data bits are switched based on the encoded code of the encoder 731 in FIG. 7B. Further, Tsym in FIG. 7B may be a duration for which the output terminal (or port) and the input terminal (or port) are connected. Tsym is a symbol duration of a symbol encoded with Manchester code, etc., and may be a duration of each bit of the encoded code, for example, '0' or '1'.

Therefore, if the coded symbol value output from the encoder 731 is '1', an OFDM signal may be output by connecting the output terminal (or port) and the On-WG input 701 during a time corresponding to Tsym, and if the coded symbol value is '0', a signal with zero energy may be output by connecting the output terminal (or port) and the Off-WG input 702 during the time corresponding to Tsym. In other words, the switch 721 may turn the OFDM signal on/off by connecting the On-WG input 701 or the Off-WG input 702 to the output terminal (or port) according to each coded value of the input data bits.

Connecting the Off-WG input to the output terminal (or port) may mean nulling the OFDM signal during the symbol duration. The same effect may be achieved by disconnecting to the On-WG input from the output terminal during the symbol duration in which the input is '0' without separately using the Off-WG input.

A windowing and post-processing unit 722 may have the same configuration and perform the same operation as the windowing and post-processing unit 712 previously described in FIG. 7A, and an analog and RF unit 723 may also have the same configuration and perform the same operation as the analog and RF unit 713 previously described in FIG. 7A. Therefore, redundant description will be omitted.

### 2. Wake-up signal multiplexing method

FIG. 8 is a conceptual diagram for describing an exemplary embodiment of a method for multiplexing WUSs in the 5G NR system.

Referring to FIG. 8, a first PDSCH 811 and a second PDSCH 813 within a channel bandwidth 810 may be configured to be spaced apart by a certain interval. In addition, a case in which a WUS 812 proposed in the present disclosure is transmitted within a band between the first PDSCH 811 and the second PDSCH 813 is illustrated. More specifically, the WUS 812 may be transmitted within a band spaced apart from the first PDSCH 811 by a first guard band 821 and spaced apart from the second PDSCH 813 by a second guard band 822.

In the 5G NR system, communication between a base station and a UE may be performed using the OFDMA scheme. In this case, the base station may allocate a separate resource for transmission of the WUS 812 in order to protect the WUS 812 from the first PDSCH 811 and the second PDSCH 812 transmitted to other terminals, as illustrated in FIG. 8. In the following description, for convenience of description, a resource configured to transmit the WUS 812 will be referred to as a 'WUS resource'.

According to the present disclosure, other 5G NR signals or data may be prevented from being transmitted in the WUS resource. Further, a filter 831 may be applied to the WUS 812 transmitted through the WUS resource to prevent interference to other signals or data transmitted in the 5G NR system. The filter 831 may allow the WUS 812 to be transmitted within the designated WUS resource. In other words, the filter 831 may prevent interference with resources through which other signals and/or data of the 5G NR system are transmitted. In addition, according to the present disclosure, in order to prevent interference with resources through which data is transmitted, guard band(s) may be additionally allocated between the WUS resource and the resources through which 5G NR data and/or 5G NR signal are transmitted.

Meanwhile, the WUS may be transmitted using the same frequency band as a band used for reception by the main radio 412 (i.e. in-band transmission). As another example, the WUS may be transmitted in a frequency band different from the frequency band used for reception by the main radio 412. For example, the WUS may be transmitted using a guard band. In this case, a frequency band used by the main radio 412 and a frequency band used by the WUS are separated (i.e. out-of-band transmission). Here, the guard band may be a band (or section) currently defined and used as a guard band in the 5G NR system.

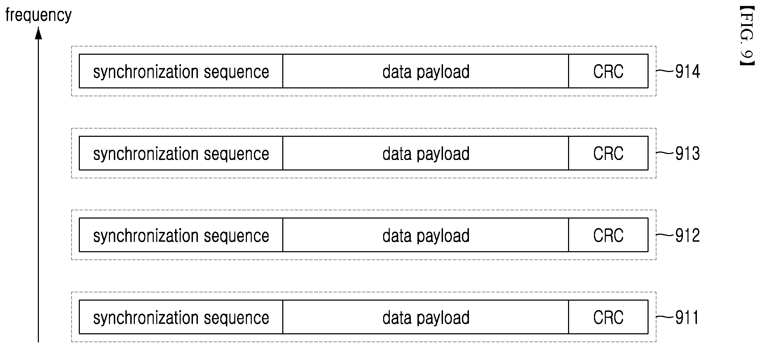

FIG. 9 is a conceptual diagram for describing a case where a plurality of WUSs are transmitted based on a frequency division multiplexing (FDM) scheme.

Referring to FIG. 9, WUSs 911, 912, 913, and 914 may be transmitted at the same time in different frequency bands. Each of the WUSs 911, 912, 913, and 914 may include a synchronization sequence, data payload, and CRC, as previously described in FIG. 5. As illustrated in FIG. 9, the WUSs 911, 912, 913, and 914 may be transmitted simultaneously as being frequency division multiplexed (FDMed) in specific bandwidth parts (BWPs) in a communication system with a wide band such as the 5G NR system. As illustrated in FIG. 9, the base station may transmit the WUSs 911, 912, 913, and 914 by frequency-division-multiplexing them, so that the UE appropriately receives the WUS regardless of a BWP that the UE uses. As another example, when it is desired to transmit a WUS for a specific UE or UE group, the WUS may be transmitted in each BWP used by the UE or UE group.

In FIG. 9, frequency resources to be used for WUS reception may be configured for each UE or UE group through RRC signaling. For example, a UE and/or UE group may be configured with frequency resources to be used for WUS reception through signaling such as an RRC setup request or RRC reconfiguration message. As another example, a UE and/or UE group may be configured with frequency resources to be used for WUS reception through second layer (layer 2, L2) signaling by defining a separate field within a MAC CE.

In case of the 5G NR system, the main radio 412 may use an FR1 band or FR2 band. As is well known, the FR2 band is a significantly higher band than the FR1 band. When the main radio 412 uses the FR2 band and also transmits a WUS in the FR2 band, a problem may occur in which a transmission range of the WUS is shorter than that of the main radio 412 in FR2 band. Therefore, to solve the above-described problem, one of the three methods below may be used.

Method 1: When the main radio 412 uses a very high frequency band, such as FR2, the WUS may be transmitted through a low frequency band, such as FR1.

Method 2: When the main radio 412 uses a very high frequency band such as FR2, the WUS may also be transmitted in the same frequency band of FR2, but beamforming may be applied to the WUS to secure a transmission range of the WUS, and the WUS may be transmitted by applying a beam sweeping scheme.

Method 3: When the main radio 412 uses a very high frequency band such as FR2, the WUS may also be transmitted in the same frequency band of FR2, and spreading may be applied to a data payload of the WUS to extend a transmission coverage of the WUS. As a scheme for spreading, a simple bit repetition or Manchester coding scheme may be used.

The case where the spreading factor of the Manchester code is 2 has been previously described with reference to Table 1. When the spreading factor is 4, input and output of the Manchester code may be illustrated as shown in Table 2 below.

**[Table 2]**

| Input bit | Coded bits |
|---|---|
| 0 | 1010 |
| 1 | 0101 |

When comparing Table 2 with Table 1 described above, it can be seen that output information of the Manchester code is doubled. By comparing Table 1 and Table 2, it can be seen that a code rate of the Manchester code is determined based on the spreading factor. For example, if the spreading factor is 2 as in Table 1, the code rate may be 1/2, and if the spreading factor is 4 as in Table 2, the code rate may be 1/4.

When applying Method 3, the spreading factor to be applied to the data payload of the WUS may be set in advance through RRC signaling. For example, the spreading factor to be applied to the data payload of the WUS may be set in advance using an RRC setup request or RRC reconfiguration message. As another example, the spreading factor to be applied to the data payload of the WUS may be set through a MAC CE of L2.

Accordingly, the UE may identify the spreading factor value set in advance through RRC signaling or MAC CE. The identification may be made at the main radio 412, and the identified spreading factor may be provided to the WUR 411. The WUR 411 of the UE may receive a WUS in the corresponding frequency band based on the spreading factor provided from the main radio 412.

The scheme of extending the transmission coverage using the above spreading scheme may be used not only for FR2 but also for extending a transmission coverage when transmitting the WUS in FR1.

The above description is dependent on the modulation scheme of the WUS, but most of the contents described later are methods that are not dependent on the modulation scheme of the WUS. That is, most of the contents described later may be applicable method regardless of the modulation schemes such as OOK, FSK ODFM, and the like.

### 3. Extension of 5G NR RRC states for WUS

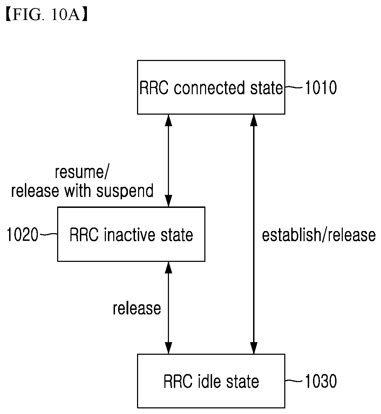

FIG. 10A is a conceptual diagram illustrating RRC states in the 5G NR system.

Referring to FIG. 10A, RRC states may include an RRC connected state 1010, RRC inactive state 1020, and RRC idle state 1030.

The RRC connected state 1010 may mean a state in which the UE has established an RRC connection with a radio access network (RAN) or a base station. Therefore, the UE in the RRC connected state 1010 may be in a state of being connected to not only a base station but also a core network. The UE in the RRC connected state 1010 needs to continuously monitor control channels transmitted by the base station. In other words, the RRC connected state 1010 may mean a state in which the UE is able to transmit and receive control signals and/or data with the base station using radio channels.

The RRC inactive state 1020 may be a state in which the RRC connection is suspended, but connection with the core network remains established. Therefore, the UE needs to continuously monitor paging initiated by the RAN. If the RAN pages the UE in the RRC inactive state 1020, the UE in the RRC inactive state 1020 may quickly transit to the RRC connected state 1010 to receive data.

The RRC idle state 1030 may be a state in which the RRC connection of the UE is released and the UE is disconnected from the core network. The UE in the RRC idle state 1030 needs to continuously monitor paging initiated by the core network. If the UE in the RRC idle state 1030 is paged by the core network, the UE in the RRC idle state 1030 needs to transit to the RRC connected state 1010. In this case, a time required for the UE in the RRC idle state 1030 to transit to the RRC connected state 1010 is relatively longer than a time required for the UE in the RRC inactive state 1020 to transit to the RRC connected state 1010.

As illustrated in FIG. 10A, the UE in the RRC connected state 1010 may transit to the RRC idle state 1030 or the RRC inactive state 1020. In addition, the UE in the RRC inactive state 1020 may transit to the RRC idle state 1030 or the RRC connected state 1010. In addition, the UE in the RRC idle state 1030 may transit to the RRC inactive state 1020 or the RRC connected state 1010.

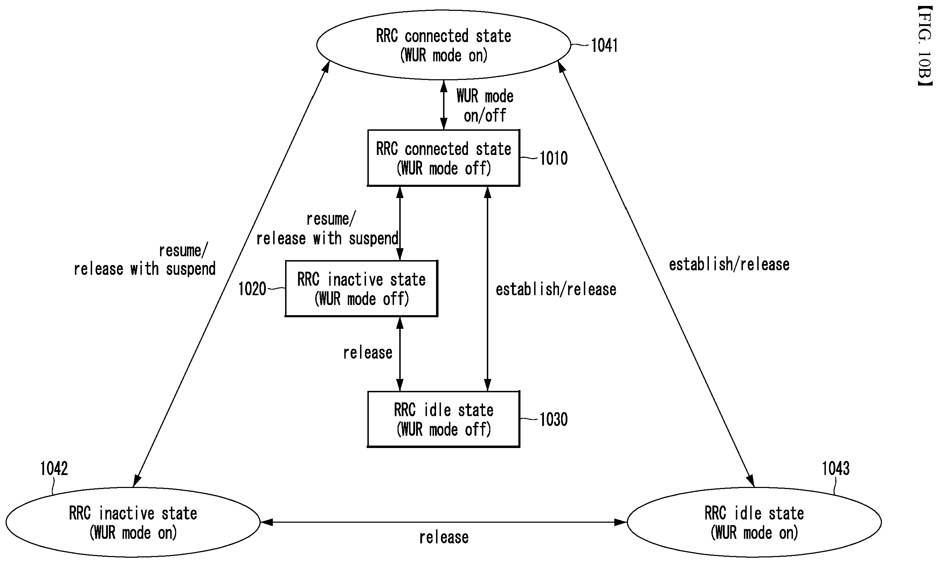

FIG. 10B is a conceptual diagram illustrating RRC states based on WUR mode on/off states according to the present disclosure.

In FIG. 10B, a WUR mode off state may be a state in which a power saving operation using the WUR is not used, and in the WUR mode off state, the existing RRC states, that is, RRC connected state 1010, RRC inactive state 1020, and RRC idle state 1030, may be used. In FIG. 10B, a WUR mode on state may be a state in which a power saving operation using the WUR 411 is used. In the WUR mode on state, only the WUR may be turned on and the main radio may be turned off, and when the WUR receives a WUS, the WUR may wake up the main radio to the on state. Here, the 'WUR mode on state' and 'WUR mode off state' should not be confused with a 'WUR on state' and a 'WUR off state'. That is, in the WUR mode on state, the WUR is in the on state and the main radio is in the off state while there is no data to be transmitted. When the base station has data to transmit to the UE, a WUS may be transmitted and the WUR may turn on the main radio. The WUR may be in the off state to save power while the main radio is in the on state. When transmission from the base station to the main radio is completed, the WUR may be turned on again and the main radio may be turned off. The mode in which this series of processes is performed may be referred to as the WUR mode on state. In the WUR mode on state, in addition to the existing RRC states described above, extended RRC connection states described below may be used.

It should be noted that the same parts in FIG. 10B as in FIG. 10A have the same reference numerals. In other words, the RRC connected state 1010, RRC inactive state 1020, and RRC idle state 1030 may be the same states as previously described in FIG. 10A. The RRC connected state 1010, RRC inactive state 1020, and RRC idle state 1030 may each be modes that do not use the WUR according to the present disclosure. Therefore, there is a difference of FIG. 10B in that the WUR mode off state is added to each of the RRC connected state 1010, RRC inactive state 1020, and RRC idle state 1030.

The states extended according to the present disclosure may include an RRC connected state 1041, RRC inactive state 1042, and RRC idle state 1043 as respectively corresponding to the RRC connected state 1010, RRC inactive state 1020, and RRC idle state 1030, which are the states specified in 5G NR. Each of the RRC connected state 1041, RRC inactive state 1042, and RRC idle state 1043 according to the present disclosure may be exemplified as a case where the WUR mode is turned on. Each of these states may be extended states. In other words, each of the states according to the present disclosure may be referred to as the extended RRC connected state 1041, extended RRC inactive state 1042, and extended RRC idle state 1043.

The RRC connected state 1010, RRC inactive state 1020, and RRC idle state 1030, which are the states specified in 5G NR, have each been defined in the absence of the WUR 411, but in the present disclosure, they will be described as being in the WUR mode off state.

Accordingly, each of the RRC connected state 1041, RRC inactive state 1042, and RRC idle state 1043 additionally defined according to the present disclosure in FIG. 10B may mean states in which the WUR 411 mode is turned on.

According to the present disclosure, when the WUR 411 mode is turned on, the main radio 412 may be mostly turned off when the base station has no data to transmit. Therefore, the WUR 411 may perform an operation of receiving a WUS and waking up the main radio 412. For example, in the RRC inactive state 1042 and the RRC idle state 1043, the WUR 411 may remain turned on and the main radio 412 may remain turned off. In this case, when a WUS is received, the WUR 411 may detect the WUS and wake up the main radio 412 based on a data payload included in the WUS. In other words, the main radio 412 may be turned on based on a signal received from the WUR 411. Operations in the RRC idle state 1043 with the WUR mode turned on and operations in the RRC inactive state 1042 with the WUR mode turned on will be further described below.

Meanwhile, even in the RRC connected state 1041, if the base station has no data to transmit, the WUR 411 may be turned on and the main radio 412 may be turned off. That is, in order to reduce power consumption, in case of the extended RRC connected state 1041 according to the present disclosure, the UE may operate with the main radio 412 turned off despite the RRC connected state. In this case, the main radio may remain in a sleep state without continuously monitoring PDCCHs, and when the WUR 411 receives a WUS, the WUR 411 may turn on the main radio 412 so that the main radio 412 monitors a PDCCH and received data through a PDSCH. Operation in the RRC connected state 1041 with the WUR mode turned on will be further described below.

On the other hand, in the RRC inactive state 1042, the RRC idle state 1043, or the RRC connected state 1041 according to the present disclosure, the WUR 411 may operate in a discontinuous reception (DRX) mode. If the WUR 411 operates in the DRX mode in the RRC inactive state 1042, RRC idle state 1043, or RRC connected state 1041, there is an advantage in further saving power of the UE. However, if the WUR 411 operates in the DRX mode in the RRC inactive state 1042, RRC idle state 1043, or RRC connected state 1041, a latency may occur in receiving the WUS as compared to the case where the WUR 411 does not operate in the DRX mode. In particular, since a low-latency operation is more important in the RRC connected state 1041, the DRX operation of the WUR 411 may not be used in the RRC connected state 1041, and the DRX operation of the WUR 411 may be used only in the RRC inactive state 1042 and the RRC idle state 1043.

According to the present disclosure, when the main radio 412 (i.e. UE) is in the RRC connected state 1010 or 1041, the base station (e.g. gNB) may configure the mode of the WUR 411 using an RRC setup request or RRC reconfiguration message.

For example, as illustrated in FIG. 10B, when the base station instructs the WUR 411 mode to be turned on in the RRC connected state 1010, the UE may transit to the RRC connected state 1041, and in this state, the WUR may be in the on state and the main radio may be in the off state. When the main radio 412 (i.e. UE) is in the RRC connected state 1010 or 1041, the base station may inform the UE of a resource allocated for WUS transmission (e.g. a center frequency and a bandwidth used for WUS transmission, etc.). As another example, the base station may configure the on/off state of the WUR mode in the second layer (layer 2, L2) by defining a MAC CE, and may provide or modify, using related parameters in the MAC CE, resource allocation information such as a center frequency and a bandwidth used for WUS transmission.

As another example, when the base station instructs to turn off the WUR mode in the RRC connected state 1041 illustrated in FIG. 10B, the UE may transit to the RRC connected state 1010. In other words, the WUR 411 may be turned off, and the main radio may remain turned on. In the RRC connected state 1010, the main radio may also use the existing DRX-based power saving scheme.

When the WUR mode is in the on state, as described above, state transitions may occur between the RRC connected state 1041, the RRC inactive state 1042, and the RRC idle state 1043.

For example, upon receiving a WUS in the RRC idle state 1043, the WUR 411 may wake up the main radio 412. Accordingly, the UE may transit to the RRC connected state 1041 after performing an RRC establishment procedure. Then, the UE may monitor a PDCCH and receive data through a PDSCH. When the main radio 412 of the UE completes data transmission and reception in the RRC connected state 1041, the WUR 411 may be turned on and the main radio 412 may be turned off. The base station may continue to leave the UE in the RRC connected state 1041, or the base station may indicate 'release' or 'release with suspend' to the UE. When 'release' or 'release with suspend' is indicated by the base station, the UE may transit to the RRC idle state 1043 or RRC inactive state 1042. Operations in the RRC idle state 1043 with the WUR mode turned on will be further described below.

Upon receiving a WUS in the RRC inactive state 1042, the WUR 411 may wake up the main radio 412. Accordingly, the UE may transit to the RRC connected state 1041 after performing an RRC resume procedure. Then, the UE may monitor a PDCCH and receive data through a PDSCH. When the main radio 412 of the UE completes data transmission and reception in the RRC connected state 1041, the WUR may be turned on and the main radio 412 may be turned off, and the base station may continue to leave the UE in the RRC connected state 1041. Alternatively, the base station may indicate 'release' or 'release with suspend' to the UE. When 'release' or 'release with suspend' is indicated by the base station, the UE may transit to the RRC idle state 1043 or RRC inactive state 1042. Operations in the RRC inactive state 1042 with the WUR mode turned on will be further described below.

In the RRC connected state 1041, the WUR mode may be turned on. When the base station has no data to transmit, the WUR 411 may be turned on and the main radio 412 may be turned off, and when the base station has data to transmit, the WUR 411 may wake up the main radio 412 by receiving a WUS. In this case, since the main radio 412 is already in the RRC connected state, after the WUR 411 wakes up the main radio, the main radio 411 may immediately monitor a PDCCH and receive data through a PDSCH without the RRC establishment or resume procedure. When the main radio of the UE completes data transmission and reception in the RRC connected state 1041, the WUR 411 may be turned on and the main radio 412 may be turned off, and the base station may continue to leave the UE in the RRC connected state 1041. Alternatively, the base station may indicate 'release' or 'release with suspend' to the UE. When 'release' or 'release with suspend' is indicated by the base station, the UE may transit to the RRC idle state 1043 or RRC inactive state 1042. Operations in the RRC connected state 1041 with the WUR mode turned on will be further described below.

The base station may need to check whether the UE has a WUR and whether various state transitions according to WUR on/off are possible. Therefore, the base station may transmit a UE capability enquiry message to the UE. Then, the UE may report UE capability information to the base station in response to the UE capability enquiry message. In this case, the UE capability information may include whether the UE supports the WUR functions, information on supportable spreading factors, and/or the like.

### 4. WUR-based power saving procedure

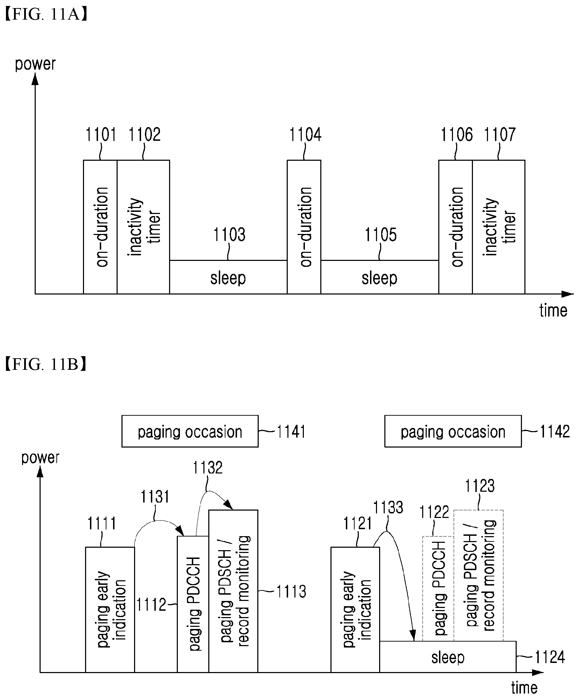

FIG. 11A is a conceptual diagram illustrating a power saving procedure using DRX in the 5G NR system.

In the 5G NR system, the UE may perform a DRX operation. Referring to FIG. 11A, on-duration periods 1101, 1104, and 1106 may be periods in which the UE periodically wakes up and receives data (or channels) from the base station. Here, the data or channel may be a PDCCH and/or PDSCH. In other words, the UE may wake up at a predetermined periodicity based on a DRX cycle set by the base station through RRC signaling, and attempt to receive data from the base station. In this case, the predetermined periodicity may be the DRX cycle.

In addition, the UE may wait to receive data during a time set in an inactivity timer configured by RRC signaling, and if no data is received during the time set in the inactivity timer, the UE may transit to a sleep state. In FIG. 11A, periods 1102 and 1107 in which the UE waits for reception according to the inactivity timer are illustrated. During the time set by the inactivity timer, the UE may wait to receive data from the base station and may check whether there is data to be received. If no data is received during this period, the UE may transit to a sleep mode. In FIG. 11A, sleep periods 1103 and 1105 are illustrated. In the sleep periods 1103 and 1105, the UE may turn off a receiver because it has stopped receiving signals from the base station. Through this, the UE may reduce battery power consumption.

A UE in the RRC inactive state or a UE in the RRC idle state needs to monitor a paging channel every time it wakes up to identify whether it has data paged. In other words, the UE needs to monitor the paging channel in the on-duration periods 1101, 1104, and 1106 and the periods 1102 and 1107 waiting for reception according to the inactivity timer. The monitoring of the paging channel may be performed by receiving a PDCCH in a configured paging occasion (PO) and checking a paging indication. More specifically, if a paging indication exists on a PDCCH received in the paging occasion, the UE may identify a paging message or paging record decoded from a PDSCH scheduled by the PDCCH to determine whether the UE has paged data by identifying whether its UE ID is included in the paging message or paging record. Since a case where data paged to the UE exists corresponds to a case where the UE has data to receive, the UE may transit to the RRC connected state through a random access channel (RACH) procedure, RRC establishment procedure, or RRC resume procedure. Accordingly, the UE in the RRC connected state may receive the data from the base station.

On the other hand, when there is no data paged to the UE as a result of checking the paging message or paging record, the UE may transit to the sleep mode state.

FIG. 11B is a conceptual diagram illustrating a power saving procedure using a paging early indication in the 5G NR system.

Referring to FIG. 11B, paging early indications (PEIs) 1111 and 1121 are illustrated. The PEIs 1111 and 1121 proposed in the 3GPP Rel-17 have been introduced to reduce an overhead of a UE decoding a paging-related PDCCH and/or PDSCH even when the UE does not have actual paged data. The PEIs 1111 and 1121 may include information informing a specific UE or UE group whether paging for the UE or UE group needs to be monitored in a subsequent paging occasion. Accordingly, the UE may decode the PEIs 1111 and 1121 at a time of transmission of the PEIs 1111 and 1121, and decode a paging-related PDCCH and/or PDSCH only when paging actually exists for the UE.

As illustrated in FIG. 11B, if the UE is indicated to monitor paging as a result of decoding the PEI 1111, the UE may receive and decode a paging PDCCH 1112 in a subsequent paging occasion 1141. The UE may identify whether the UE has data paged to itself by identifying whether its UE ID is included in a paging message or paging record 1113 decoded from a paging PDSCH scheduled by the paging PDCCH 1112.

FIG. 11B illustrates a procedure for decoding the paging PDCCH 1112 in the paging occasion 1141 based on the PEI 1111 as indicated by a reference numeral 1131. In addition, as indicated by a reference numeral 1132, an operation in which the UE monitors a paging PDSCH and record 1113 based on decoded information of the paging PDCCH 1112 is illustrated.

Meanwhile, in FIG. 11B, if the UE is not indicated to monitor paging as a result of decoding the PEI 1121, the UE may transit to a sleep mode 1124. In FIG. 11B, a case in which the UE transit to the sleep mode 1124 in the paging occasion 1142 based on the PEI 1121 is illustrated as indicated by a reference numeral 1133. Furthermore, a dotted line indicates that monitoring on the paging PDCCH 1122 and paging PDSCH and record 1123 is not performed.

### [A]. Power saving procedure by UE using a WUR in the RRC idle or inactive state

Hereinafter, a procedure in which the UE according to the present disclosure performs power saving using a WUR in the RRC idle state or inactive state will be described. Hereinafter, a case where a WUS is transmitted to a UE group, and a case where a WUS is transmitted to each individual UE will be described as being discriminated.

### A-1. Case of designating target UEs by using a group ID in a WUS

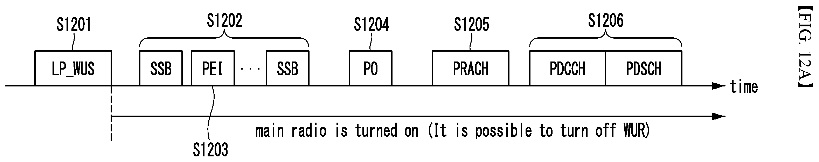

FIG. 12A is a conceptual diagram illustrating a UE operation procedure when designating target UEs by using a group ID in a WUS.

Referring to FIG. 12A, in step S1201, the WUR 411 of the UE may receive a low power (LP) WUS (hereinafter referred to as 'LP_WUS') in a preconfigured band. If the LP_WUS received in step S1201 includes a group ID of a group to which the UE belongs, the WUR 411 may wake up the main radio 412.

In step S1202, the main radio 412 of the UE may receive synchronization signal blocks (SSB) from the base station and acquire synchronization. Through step S1202, the UE may acquire downlink synchronization with the base station. Step S1202 may be performed when acquisition of downlink synchronization between the main radio 412 and the base station is required after the main radio 412 is turned off (or sleeps) for a long time. Accordingly, the main radio 412 may acquire time and frequency synchronization by receiving one or more SSBs. In this case, when necessary, system information included in the SSBs may be updated.

In step S1203, the main radio 412 of the UE may identify a PEI. The PEI may include information as previously described in FIG. 11B. If the PEI indicates to monitor paging for the UE itself, a paging occasion (PO) may be monitored in step S1204, and if the PEI does not indicate to monitor paging, the main radio 412 may transit to a power-off state (or sleep mode).

If the WUS does not specify a specific UE ID, but specifies target UEs by a group ID, all UEs belonging to the same group ID may not be paged. For example, it may be assumed that a group A includes 7 UEs (e.g. UE #1, UE #2, UE #3, UE #4, UE #5, UE #6, and UE #7). In this case, when paging is performed only for the UE #1, UE #2, UE #4, UE #6, and UE #7 among the UEs belonging to the group A, the LP_WUS may specify the group A. Accordingly, although the UE #3 and UE #5 belong to the group A, they may not actually be paged. In this case, the UE #3 and UE #5 may each identify the PEI in step S1203 and identify that their UE IDs are not included in the paging by confirming that paging monitoring is not indicated for them based on the PEI. Accordingly, since each of the UE #3 and UE #5 does not need to perform step S1204 and subsequent steps, they may immediately turn off the main radio 412 by only identifying that the PEI in step S1203 does not indicate to monitor paging.

On the other hand, the UE #1, UE #2, UE #4, UE #6, and UE #7 among the UEs belonging to the group A may all have paging for themselves. The UE #1, UE #2, UE #4, UE #6, and UE #7 may each receive and decode a paging PDCCH in the PO in step S1204, and finally identify that they have paged data by identifying that their UE IDs are included in a paging message decoded from a PDSCH scheduled by the paging PDCCH. In other words, the paging message may be identified similarly to what was previously described in FIG. 11B.

The UEs identifying the paging message may perform a RACH procedure (e.g. random access procedure), and perform an RRC establishment procedure (when the UE is in the RRC idle state) or RRC resume procedure (when the UE is in the RRC inactive state) in step S1205, thereby transitioning back to the RRC connected state.

In step S1206, each UE transitioning to the RRC connected state may monitor a PDCCH and receive data through a PDSCH. In other words, each UE may receive downlink data transmitted to itself from the base station. In addition, although not illustrated in FIG. 12A, if uplink data transmission is necessary, each UE may transmit uplink data to the base station.

When the main radio 412 of the UE completes data transmission and reception in the RRC connected state, the WUR 411 may be turned on and the main radio 412 may be turned off, and the base station may continue to leave the UE in the RRC connected state. Alternatively, the base station may indicate 'release' or 'release with suspend' to the UE. When the base station indicates 'release' or 'release with suspend', the UE may transit back to the RRC idle state or RRC inactive state.

Step S1203 of identifying the PEI may be performed only by UEs that support the PEI, and UEs that do not support the PEI may skip the step of identifying the PEI and perform the step of monitoring the paging in the PO in step S1204. In this case, the UE that does not support the PEI needs to perform step S1204 to identify the paging message even if the UE is not actually paged.

Also when the base station does not support or use the PEI, step S1203 of identify the PEI may be skipped, and the UEs may perform the step of monitoring the paging in the PO in step S1204.

If the UE performs synchronization by receiving multiple SSBs, the PEI may be transmitted immediately after a first SSB is transmitted. If the UE receives the PEI and identifies that the PEI does not indicate to monitor paging for the UE, the UE may immediately turn off the main radio without receiving SSBs transmitted after the PEI, thereby further saving power.

Regarding the group ID of a group as described above, a specific UE may join or leave a group through a procedure by which the specific UE is included or removed from the group. A procedure for joining or leaving a group may be performed during an RRC setup request or RRC reconfiguration procedure. As another example, the UE's group configuration may be defined in a MAC CE, and a procedure to assign the UE to join a specific group or a procedure to remove the UE from a specific group may be performed.

### A-2. Case of designating target UE(s) by using individual UE ID(s) in a WUS

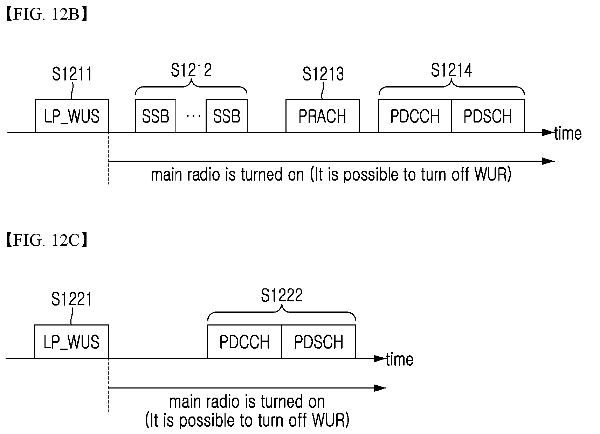

FIG. 12B is a conceptual diagram illustrating a UE operation procedure when designating target UE(s) by using individual UE ID(s) in a WUS.

Referring to FIG. 12B, in step S1211, the WUR 411 of the UE may receive a LP_WUS in a preconfigured band. If the LP_WUS received in step S1211 includes a corresponding UE ID, the WUR 411 may wake up the main radio 412. In this case, an individual UE ID such as a 5G-S-TMSI or inactive radio network temporary identifier (I-RNTI) may be used to designate a UE that needs to be woken up. The 5G-S-TMSI may be used as a UE ID for a UE in the RRC idle state, and the I-RNTI may be used as a UE ID for a UE in the RRC inactive state.

In step S1212, the main radio 412 of the UE may receive SSBs from the base station, and acquire synchronization. Step S1212 may be the same procedure as step S1202 previously described in FIG. 12A. Therefore, redundant description will be omitted.

Meanwhile, it can be seen in FIG. 12B that the PEI reception and PO reception procedures are omitted compared to FIG. 12A. This may be possible because the UE ID, such as 5G-S-TMSI or I-RNTI, which is unique to the UE, is explicitly used in the WUS. That is, since the base station explicitly specifies in the LP-WUS the specific UE ID that is actually paged, the specific UE ID may prevent a main radio of a UE that is not actually paged from waking up as in the case A-1 of using a group ID. As a method of specifying UE ID(s) in a WUS, one WUS may include a UE ID list. Alternatively, one WUS may include only one UE ID, and when waking up multiple UEs at once, multiple WUSs may be transmitted. When transmitting multiple WUSs, the multiple WUSs may be transmitted using frequency division multiplexing to multiple WURs configured to use different frequency bands, as illustrated in FIG. 9 described above.

Accordingly, unlike the case of FIG. 12A described above, in case of FIG. 12B, it is possible to prevent a UE without paged data from waking up. Therefore, there is no need to perform the PEI reception and PO reception procedures required in FIG. 12A.

In step S1213, the UE may perform a RACH procedure (e.g. random access procedure), and perform an RRC establishment procedure (when the UE is in the RRC idle state) or RRC resume procedure (when the UE is in the RRC inactive state), thereby transitioning back to the RRC connected state.

In step S1214, each UE transitioning to the RRC connected state may monitor a PDCCH and receive data through a PDSCH. In other words, each UE may receive downlink data transmitted to itself from the base station. In addition, although not illustrated in FIG. 12B, if uplink data transmission is necessary, each UE may transmit uplink data to the base station.

When the main radio 412 of the UE completes data transmission and reception in the RRC connected state, the WUR 411 may be turned on and the main radio 412 may be turned off, and the base station may continue to leave the UE in the RRC connected state. Alternatively, the base station may indicate 'release' or 'release with suspend' to the UE. When the base station indicates 'release' or 'release with suspend', the UE may transit back to the RRC idle state or RRC inactive state.

Even when specifying target UE(s) by a group ID rather than the UE ID, the scheme of A-2 may be used, which omits the PEI and PO monitoring procedures even if there is some overhead. The gNB may set a maximum period to the main radio of a UE during which the UE attempts to receive data after the main radio 412 of the UE wakes up. In the present disclosure, the maximum period during which the UE attempts to receive data after the main radio 412 of the UE wakes up may be referred to as 'maximum attempt duration (Max_attemp_duration)'.

After the main radio 412 is woken up by the WUR 411, the main radio may access a first PDCCH after the RRC establishment or RRC resume procedure, and then perform a reception procedure when a downlink resource allocated to the UE exists during Max_attemp_duration after the access to the first PDCCH. On the other hand, the UE may return to the RRC inactive or idle state if there is no downlink resource allocated to the UE during the Max_attemp_duration. In this case, if the UE group is woken up using the group ID and the PEI and PO monitoring procedures are omitted in the A-2 scheme, there may be a case where UEs that are not actually paged monitor a PDCCH without identifying a paging message. However, if there is no data received during Max_attempt_duration, the main radio 412 may be turned off again and the UE may return to the RRC inactive or idle state, thereby preventing the main radio 412 of the corresponding UE from being continuously turned on unnecessarily.

### [B]. Power saving procedure by UE using a WUR in the RRC connected state

According to the present disclosure, even a UE in the RRC connected state or connected mode may enter a power saving mode by turning on the WUR mode. When the WUR mode is turned on in the connected mode, if the base station has no data to transmit, the WUR 411 may be turned on and the main radio 412 may be turned off. In this state, the main radio 412 may maintain a sleep state without continuously monitoring PDCCHs, and when the WUR 411 receives a WUS, the main radio 412 may be turned on to receive data.

In the connected mode with the WUR mode turned on, the main radio 412 of the UE may wake up periodically to acquire time and frequency synchronization through SSB(s), etc., and update system information. When a WUS is received while the UE is in the connected state and the WUR 411 turns on the main radio 412, since the main radio 412 of the UE is in synchronized state with the base station, unlike the cases A-1 and A-2, there is no need for the main radio 412 to acquire the SSBs and perform a synchronization procedure. In addition, since the main radio 412 is in the connected mode, PEI identification, PO monitoring, RACH procedure, and RRC establishment/resume procedures may be omitted.

FIG. 12C is a conceptual diagram illustrating a WUS-based operation procedure of a UE while the UE is in the RRC connected state.

In the case illustrated in FIG. 12C, as described above, it is assumed that the UE enters a power saving mode by turning on the WUR mode even in the RRC connected state or connected mode. In addition, it is assumed that the main radio 412 of the UE periodically acquires time and frequency synchronization and updates system information through SSB(s), etc. When the WUR mode is turned on in the RRC connected state, if the base station has no data to transmit, the WUR 411 may be turned on and the main radio 412 may be turned off.

In step S1221, the WUR 411 of the UE may receive a LP_WUS in a preconfigured band. If the LP_WUS received in step S1221 includes a group ID of a group to which the UE belongs or if the LP_WUS received in step S1221 explicitly specifies a UE ID, the WUR 411 may wake up the main radio 412. When specifying a UE ID in the LP_WUS in the RRC connected state, a C-RNTI of the UE may be used as the UE ID. In this case, as assumed above, since the main radio 412 is in the state of periodically acquiring time and frequency synchronization and updating system information through SSB(s), etc., the UE may be in a state of knowing the system information and in a state of acquiring time and frequency synchronization. Accordingly, steps S1202 and S1205 described in FIG. 12A may be omitted. In addition, since the UE is the RRC connected state, steps S1203 and S1204 described in FIG. 12A also may be omitted.

In step S1222, the UE may monitor a PDCCH using the main radio 412 and receive data through a PDSCH. In other words, the UE may receive downlink data transmitted to itself from the base station. In addition, although not illustrated in FIG. 12C, if uplink data transmission is necessary, the UE may transmit uplink data to the base station.

When the main radio 412 of the UE completes data transmission and reception in the RRC connected state, the WUR 411 may be turned on and the main radio 412 may be turned off, and the base station may continue to leave the UE in the RRC connected state. Alternatively, the base station may indicate 'release' or 'release with suspend' to the UE. When 'release' or 'release with suspend' is indicated by the base station, the UE may transit to the RRC idle state or RRC inactive state.

Meanwhile, a modified embodiment of FIG. 12C may also be possible. If specific UE IDs are not specified in the WUS, and target UEs are specified by a group ID as described in FIG. 12A, the base station may not actually have data to transmit to some UEs in the group. In other words, a case may occur where a UE with no data to actually receive wakes up.

In this case, the gNB may set a maximum period to the main radio of a UE (i.e. Max_attemp_duration) during which the main radio of the UE attempts to receive data after the main radio wakes up. After the main radio 412 is woken up by the WUR 411, if there is a downlink resource allocated to the UE during the Max_attemp_duration after a first PDCCH access attempt, the main radio may perform a reception procedure. However, if the main radio 412 is woken up by the WUR 411 and there is no downlink resource allocated to the UE during the Max_attemp_duration period after the first PDCCH access attempt, it may be returned to the sleep state. In this case, if there is no data received during Max_attemp_duration, the main radio 412 may be turned off again, thereby preventing the main radio 412 of the corresponding UE from being continuously turned on unnecessarily.

On the other hand, although the case of turning on/off the main radio 412 has been described, DRX operations may also be applied to the WUR 411 to further reduce power consumption. In other words, the WUR 411 may wake up periodically by applying DRX as previously described in FIG. 11A. To this end, a power saving mode of the WUR 411 itself may be additionally configured. In other words, the WUR power saving mode on/off may also be configured through RRC signaling and/or MAC CE. When RRC signaling is used, a WUR_DRX mode on (e.g. WUR_DRX_mode_on) or a WUR_DRX mode off (e.g. WUR_DRX_mode_off) may be configured through an RRC setup request message or RRC reconfiguration message. As another example, a WUR_DRX mode on (e.g. WUR_DRX_mode_on) or a WUR_DRX mode off (e.g. WUR_DRX_mode_off) may be configured using a MAC CE. When using the power saving mode of the WUR, parameters required for power saving operations of the WUR 411, such as a WUR_DRX inactivity timer (e.g. WUR_DRX_inactivity timer) value, WUR_DRX slot offset (e.g. WUR_DRX-slotoffset), WUR_DRX_on-duration (e.g. WRU_DRX_ON_duration), may be configured.

### 5. High-speed synchronization and WUR-based cell reselection method

As described above, when the main radio 412 of the UE wakes up after being in a sleep state for a long time, a synchronization overhead of the main radio 412 may occur. In addition, when the WUR 411 itself saves power, the WUR 411 itself may need to perform time and frequency synchronization.

### [A]. WUR beacon frame

A WUR beacon frame described in the present disclosure may refer to a frame transmitted from a base station to a UE. The WUR beacon frame may be a beacon transmitted in form of a WUS, and the WUR 411 illustrated in FIG. 4 may receive and decode the WUR beacon frame. A basic format of the WUR beacon frame may be the same as the WUS, and may differ from the WUS in information included in the data payload. The WUR beacon frame according to the present disclosure will be described with reference to drawings.

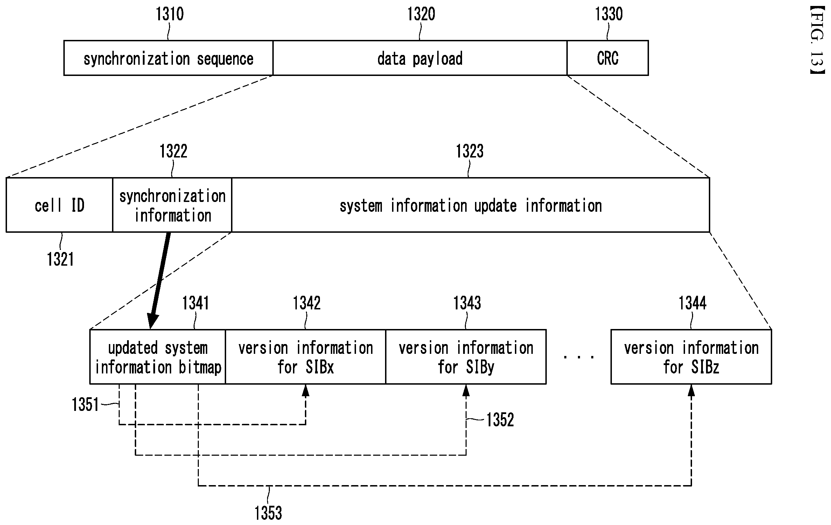

FIG. 13 is a conceptual diagram illustrating a configuration of a WUR beacon frame format.

Referring to FIG. 13, a beacon frame may include a synchronization sequence 1310, a data payload 1320, and a CRC 1330. It can be seen that the beacon frame illustrated in FIG. 13 has the same configuration as the WUS previously described in FIG. 5. However, information included in the data payload 1320 of the WUR beacon frame according to the present disclosure has a different configuration from the WUS.

The synchronization sequence 1310 of the beacon frame may use one of the types of synchronization sequences previously described in FIG. 5.

The data payload 1320 of the beacon frame may include a cell ID, synchronization information 1322, and system information update information 1323, as illustrated in FIG. 13. The system information may include not only system information transmitted by a base station through a system information block (SIB), but also various types of system information provided through RRC signaling, etc. All information in the data payload 1320 illustrated in FIG. 13 may be signaled through L1 signaling, or may be signaled through L2 signaling. Alternatively, the base station may signal the cell ID through L1 signaling and signal the remaining portion of the data payload 1320 through L2 signaling. Alternatively, the cell ID may be signaled through L1 signaling, and the remaining portion of the data payload 1320 may be signaled through RRC signaling.

The CRC 1330 of the beacon frame may be information generated to detect an error in the data payload, and the CRC 1330 may be scrambled in a specific manner. For example, the base station may (pre)set an RNTI value to indicate that a transmitted frame is the WUR beacon frame. If the RNTI value for indicating the WUR beacon frame is (pre-)set, the base station may scramble the CRC 1330 using the corresponding RNTI value. Here, the RNTI value for indicating that the WUS is the WUR beacon frame will be referred to as 'beacon wake-up signal RNTI (BCWUS-RNTI)'. When the base station transmits the WUR beacon frame in the above-described manner, the UE may recognize that the received WUS is the WUR beacon frame because a CRC of the received WUS is scrambled with the BCWUS-RNTI.

Hereinafter, information included in the data payload 1320 will be described. The data payload 1320 may include the cell ID 1321, synchronization information 1322, and system information update information 1323. These information may be signaled through L1 signaling as described above, or may be signaled through L2 signaling, higher layer (e.g. RRC) signaling, or a combination thereof.

The information included in the data payload 1320 will be described.

The cell ID 1321 may use one of various cell IDs. For example, an NR cell global identity (NCGI) may be used, or a physical cell identity (PCI) may be used. The base station may only use the PCI when signaling the cell ID 1321 through L1 signaling. Accordingly, when the WUR 411 of the UE receives the WUR beacon, it may identify the cell ID 1321 of the payload 1320. Through this, the UE may identify whether the received WUR beacon is a WUR beacon received from its own serving cell or a WUR beacon received from another cell.

Another purpose of the cell ID 1321 may be to acquire time and/or frequency synchronization with the serving cell and check updated system information of the serving cell. In other words, the WUR 411 of the UE may perform time and/or frequency synchronization using the synchronization sequence 1310 if a cell transmitting the WUR beacon is identified as its serving cell according to a result of identifying the cell ID 1321.

In addition, the cell ID may be used to check system information, for example, update information of SIB(s), which will be described below. In other words, when the received beacon frame is identified as being received from its serving cell based on the cell ID 1321, the WUR 411 of the UE may identify updated system information of the serving cell based on the system information update information.

In addition, when the UE receives the beacon frame and the cell ID 1321 is an ID of a neighbor cell or neighbor base station, the UE may obtain information on the neighbor cell or neighbor base station. In addition, as a result of identifying the cell ID of the received beacon frame, the UE may use a signal strength of the received beacon frame to determine cell reselection or handover if the received beacon frame is identified as being received from a neighbor cell or a neighbor base station.

Meanwhile, the case where the CRC 1330 of the beacon frame is scrambled using the BCWUS-RNTI has been described above. However, the CRC 1330 of the beacon frame may be scrambled with the cell ID. When the CRC 1330 of the beacon frame is scrambled by the cell ID, the cell ID 1321 field illustrated in FIG. 13 may be omitted. In other words, if the CRC 1330 of the received beacon frame is scrambled with the cell ID of its serving cell, the UE may identify that the received WUS is a WUR beacon and it is received from its serving cell.

The synchronization information field 1322 may include a system frame number (SFN) included in a master information block (MIB), time synchronization information, and/or frequency synchronization information. Accordingly, the WUR 411 of the UE may perform time and/or frequency synchronization between the base station and the UE using the information included in the synchronization information 1322. Thereafter, the WUR 411 of the UE may provide the synchronization information to the main radio 412 when waking up the main radio 412, thereby reducing the number of SSBs that need to be received when the main radio 412 wakes up. In other words, the main radio 412 may have an advantage of being able to quickly acquiring time and/or frequency synchronization with the base station without performing synchronization by receiving a large number of SSBs.

In addition, the synchronization information field 1322 may include information such as cell quality-related information related to cell selection/reselection, some information of SIB2, SIB3, and SIB4, and/or the like.

The UE may perform measurements using WUSs such as the WUR beacons and WUR discovery frames transmitted from base stations. However, measurements using WUSs may be less accurate. Therefore, the WUR 411 of the UE may wake up the main radio 412 when a measurement result of the WUS is lower than a preset measurement threshold. In this case, the preset measurement threshold may be a threshold provided by the gNB to the main radio 412 of the UE through RRC signaling, etc. When the WUR 411 wakes up the main radio 412, it may inform the main radio 412 of a reason for waking up the main radio 412. Accordingly, when the main radio 412 is woken up by the WUR 411 for the reason that a signal having a strength lower than the measurement threshold, the main radio 412 may perform measurements of signals received from the base station. As another method, there may be a method of not informing the main radio 412 of the reason for waking up the main radio 412 when the WUR 411 wakes up the main radio 412. In other words, when the main radio 412 wakes up, the main radio 412 may first receive SSB(s) and perform time and frequency synchronization, and at this time, measurement may be performed.

As described above, time and/or frequency synchronization of the WUR 411 itself may be performed using the WUR beacon. If the frequency and/or time synchronization with the base station is acquired by the WUR 411, when the WUR 411 wakes up the main radio 412, the WUR 411 may provide synchronization related information to the main radio 412, so that synchronization acquisition of the main radio 412 can be performed more quickly when the main radio 412 wakes up. In addition, various radio resource management (RRM) may be performed using WUSs such as WUR beacons, WUR discovery frames, and WUR high-speed synchronization signals.

In addition, if the UE is in a sleep state for a long time, that is, if the main radio 412 of the UE is turned off for a long time, system information of the base station may be changed. Since including system information in the WUR beacon having a WUS form has a large overhead, the WUR beacon according to the present disclosure may include only information notifying whether the system information has changed or only information of a version (i.e. version information) of the system information. Such information may be included in the system information update information 1323.

When the system information update information 1323 field includes only version information of the system information, the gNB may increase a system information version by 1 each time the system information is changed. Accordingly, if a version of system information included in a newly received WUR beacon is greater than a version of system information stored by the UE, the WUR 411 of the UE may wake up the main radio 412 to receive new system information from the gNB. For example, version information may be delivered for each SIB, or only information on newly changed SIB and version information for the corresponding SIB may be delivered as being included in the system information update information 1323.

For example, the system information update information field 1323 in FIG. 13 may include an updated system information bitmap 1341 field. The updated system information bitmap 1341 field may indicate whether contents of a specific SIB have been updated in form of a bitmap. For example, the zero-th bit of the updated system information bitmap 1341 field may indicate whether MIB has been updated, the first bit thereof may indicate whether SIB1 has been updated, and the second bit thereof may indicate whether SIB2 has been updated.

Based on the description with reference to FIG. 13, system information corresponding to each bit of the updated system information bitmap 1341 may be identified as being updated when the corresponding bit is set to '1', and the system information corresponding to each bit may be identified as not being updated when the corresponding bit is set to '0'. It may be assumed that the updated system information bitmap 1341 is set to '110010'. That is, there may be six version information for system information. If there are more than six version information for system information, the size of the bitmap may be increased. In the example where the updated system information bitmap 1341 is set to '110010', it may indicate that three types of system information (i.e. MIB, SIB1, and SIB3) have been updated.

That is, in the updated system information bitmap 1341 in FIG. 13 of the above-described example, the version information 1342 for SIBx, which is the first system information, may indicate whether the MIB has been updated, the version information 1343 for SIBy, which is the second system information, may indicate whether the SIB1 has been updated, version information for SIB2, which is third system information (not shown in FIG. 13), may indicate whether the SIB2 has been updated, version information for SIB3, which is fourth system information (not shown in FIG. 13), may indicate whether the SIB3 has been updated, and version information for SIBz, which is fifth system information, may indicate whether the SIBz has been updated. In this case, since the updated system information bitmap 1341 is set to '110010', this may indicate that the MIB, SIB1, and SIB3 have been updated, but the remaining system information such as the SIB2, SIB4, and etc. have not been updated. If the version information of the MIB and each SIB is higher than the version information stored by the WUR 411, the WUR 411 may wake up the main radio to receive the corresponding system information.

Since the above-described example corresponds to a case where version information for all system information is included and transmitted, and thus the WUR 411 is able to identify which system information the WUR 411 needs to update. In this case, the updated system information bitmap 1341 may be omitted.

In FIG. 13, reference numerals 1351, 1352, and 1353 indicate with dotted lines a correlation of which system information has been updated based on each bit of the updated system information bitmap 1341.

Based on the updated system information bitmap 1341, it may not be necessary to include version information for all SIBs in the WUR beacon. In other words, the updated system information bitmap 1341 lists updated information for all system information that can be provided to the UE in form of the bitmap, but the version information fields 1342, 1343, ..., and 1344 for SIBs included after the system information bitmap 1341 may only include version information for the updated SIBs. In this case, if the updated system information bitmap 1341 is set to '110010...' as described above, only the updated system information such as version information for the MIB, version information for the SIB1, and the version information for the SIB3 are included after the updated system information bitmap 1341. That is, only system information corresponding to bits set to '1' in the updated system information bitmap 1341 may be included in the WUR beacon. In this case, in FIG. 13, the version information 1342 for SIBx may be version information for the MIB, the version information 1343 for SIBy may be version information for the SIB1, and the version information 1344 for SIBz may be the version information for the SIB3.

Therefore, if only updated system information is included after the updated system information bitmap 1341, there is an advantage in reducing the data payload size of the WUR beacon frame. In this case, the updated system information bitmap 1341 may not be omitted.

In this example, the WUR 411 may identify the version information of the updated MIB, the version information of the updated SIB1, and the version information of the updated SIB3, and when the version information is higher than the version information stored in itself, the WUR 411 may wake up the main radio 412 to receive the corresponding system information.

In order to reduce the bitmap size, the fields of the system information update information 1323 may be configured differently than the above configuration. The UE may notify the base station in advance of only system information it wishes to receive through a WUR beacon frame among all system information using a specific method (e.g. RRC signaling message). For convenience of description, the following description assumes that there are four types of system information that the UE wishes to receive: MIB, SIB1, SIB2, and SIB4. However, it should be noted that this is merely an example for convenience of description and exemplary embodiments are not limited thereto.

The base station notified by the UE about the system information that the UE wishes to receive through a WUR beacon frame may include only bitmap fields for four types of information in the system information update information 1323 in the WUR beacon frame. Accordingly, the updated system information bitmap 1341 may consist of a total of 4 bits, and the version information fields for SIBs may be configured as four fields. When the type of system information that the UE wishes to receive through a WUR beacon is limited to only essential system information for the UE, the data payload size of the WUR beacon frame can be further reduced.

Meanwhile, when a field is configured to transmit MIB information by including most of the MIB information in the synchronization information field 1322, version information for the MIB may not be transmitted separately in the updated system information bitmap 1341. When the most of the MIB information is transmitted to the UE as being included in the synchronization information field 1322, the version information fields for the SIBs may be configured without version information for the MIB. In other words, information on the MIB may not be transmitted separately.

Whether the updated system information bitmap 1341 is included in the WUR beacon may be indicated by allocating one bit in the synchronization information field 1322. For example, if the one bit in the synchronization information field 1322 configured to indicate whether the updated system information bitmap 1341 is included in the WUR beacon is set to '0', it may indicate that the updated system information bitmap field 1341 and the version information fields thereafter are not included in the WUR beacon, and if the one bit in the synchronization information field 1322 configured to indicate whether the updated system information bitmap 1341 is included in the WUR beacon is set to '1', it may indicate that the updated system information bitmap field 1341 and the version information fields thereafter are included in the WUR beacon.

In other words, if there is no updated system information, the corresponding bit in the synchronization information field 1322 may be indicated as '0'. In this case, the base station may omit the updated system information bitmap field 1341 and subsequent version information fields.

On the other hand, if the updated system information exist, the corresponding bit in the synchronization information 1322 field may be indicated as '1'. In this case, the UE may identify the updated system information bitmap 1341 included in the system information update information field 1323. In addition, the UE may identify each version of system information whose version information is indicated to be updated in the updated system information bitmap 1341 from the corresponding version information field included after the system information bitmap 1341. If the identified version information is larger than the corresponding version information that the UE has (stored in memory), the WUR 411 may wake up the main radio 412 to receive the corresponding system information.

Power consumption may vary depending on the time the WUR 411 wakes up the main radio 412. Therefore, when the WUR 411 wakes up the main radio 412 to update system information, the WUR 411 may wake up the main radio based on a transmission periodicity of system information.

For example, when specific system information that needs to be updated is broadcast periodically, the WUR 411 may wake up the main radio 412 a certain time before the corresponding system information is transmitted to receive the corresponding system information. Here, the certain time may include a preparation time for the main radio 412 to wake up and receive signals.

On the other hand, if specific system information is not broadcast periodically, that is, if the UE needs to request and receive it from the base station, the WUR 411 may wake up the main radio 412 immediately when it is recognized that new system information needs to be received. Accordingly, the main radio 412 may identify, from the WUR 411, which system information needs to be received, and perform a procedure for receiving the corresponding system information.

If a preamble allocated for a request for a specific SIB is promised between the UE and the base station, the main radio 412 of the UE may transmit a first message (Msg1) including the preamble to the base station (e.g. gNB). When the base station receives the Msg1 requesting the specific SIB from the UE, the base station may transmit the corresponding SIB.

As another example, if a preamble allocated for a request for a specific SIB is not promised between the UE and the base station, the main radio 412 of the UE may perform a RACH procedure and transmit a Msg3 including an RRC system information request (RRCSystemInfoRequest) to the base station after exchanging Msg1 and Msg2 with the base station. When the base station receives the RRCSystemInfoRequest message, the base station may transmit the corresponding system information.

On the other hand, version information for a specific SIB may not be included in the WUR beacon, but only the updated system information bitmap 1341 may be included in the WUR beacon. In this case, whether a specific SIB has been updated may be informed and version information thereof may not be provided through the WUR beacon. This scheme may be usable when the WUR 411 of the UE receives the WUR beacon every WUR beacon cycle. When the WUR 411 of the UE does not wake up every WUR beacon cycle, a problem may occur in which updated system information cannot be received several times while the WUR 411 operates in the sleep mode. Therefore, when the WUR 411 of the UE does not wake up every WUR beacon cycle, a method of including version information for a specific SIB in the WUR beacon may need to be used to inform exactly which SIB has been updated.

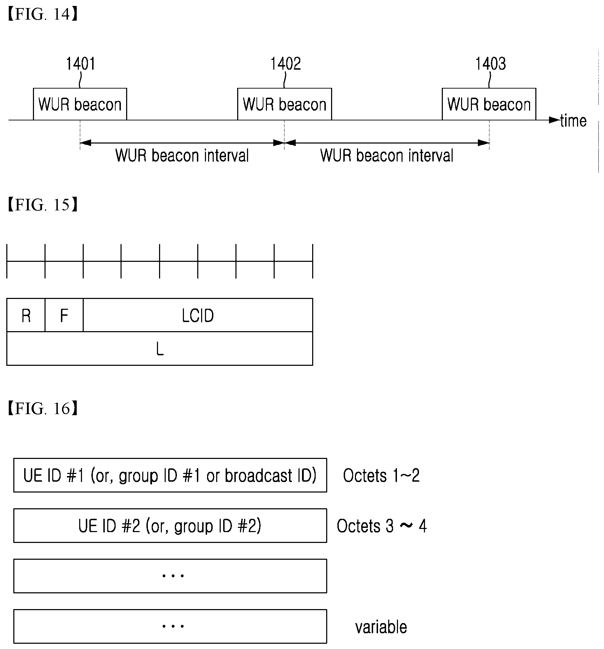

FIG. 14 is a conceptual diagram illustrating periodic transmission of a WUR beacon frame.

Referring to FIG. 14, a case in which a plurality of WUR beacons 1401, 1402, and 1043 are transmitted at a WUR beacon interval is illustrated. As illustrated in FIG. 14, the WUR beacons 1401, 1402, and 1403 may be transmitted at preconfigured intervals, and the corresponding interval may be informed in advance to the main radio 412 of the UE through RRC signaling from the base station (e.g. gNB). Therefore, the main radio 412 may inform the WUR 411 of information on the WUR beacon interval when the WUR 411 is turned on. The WUR 411 may wake up at every WUR beacon interval, and receive the WUR beacon, or may remain in the sleep mode for a longer time period. If the WUR 411 wishes to remain in the sleep mode without waking up at every beacon interval, the UE and gNB may negotiate in advance to determine the number of WUR beacon interval in which the WUR 411 is to wake up during an RRC setup procedure, thereby setting a wake-up periodicity for the WUR 411.

### [B]. WUR discovery frame

According to the present disclosure, the WUR 411 of the UE may be supported to obtain not only the WUR beacon frames but also cell quality-related information of neighbor cells. To this end, the present disclosure may support a WUR discovery frame. From the UE's perspective, the WUR discovery frame may be a WUS frame transmitted by a neighbor gNB or neighbor cell.

The WUR discovery frame according to the present disclosure may utilize the WUR beacon frame described above. However, since the WUR beacon frame may include information that is not necessary for the UE, the WUR discovery frame may include only information that needs to be transmitted by a neighbor gNB or neighbor cell. For example, it may be preferable to transmit, to UEs located in neighbor cells, an optimized WUS frame including cell ID, cell minimum quality level, and cell selection and reselection related information. Configuring the WUR discovery frame as described above may make it more efficient for the UE to measure a quality of the neighbor cell and perform cell reselection.

In other words, a minimum quality level of a cell, cell selection/reselection related information, etc. may be added to the synchronization information field 1322 of the WUR beacon frame previously described in FIG. 13, and the WUR beacon of the neighbor gNB may be used for cell selection/reselection. The system information update information 1323 may include information for measuring neighbor cells and determining cell selection/reselection.

However, since only some system information such as MIB and SIB1 are needed to measure qualities of the UE's neighbor cells and make cell selection/reselection decisions, and no other system information is needed, it may be inefficient to use the WUR beacon as is. Accordingly, a WUR discovery frame format may be needed that excludes the rest of information of the WUR beacon.

Therefore, the size of the WUR discovery frame can be reduced by generating and transmitting the WUR discovery frame in form of a WUS, which is configured by optimizing the WUR beacon format to include only the cell ID, minimum quality level of the cell, and cell selection and re-selection related information.

### [C]. High-speed synchronization signal for main radio

When the main radio 412 wakes up after a long sleep, the main radio may need to receive multiple SSBs from the base station to perform time and/or frequency synchronization. If the main radio 412 needs to receive multiple SSBs, a synchronization delay may occur. To reduce this delay, in the present disclosure, the base station may transmit a small-sized synchronization signal including only a synchronization-related reference signal for the main radio, immediately after the WUR 411 wakes up the main radio, or before or after transmitting a PEI, or before a paging occasion for the main radio, thereby allowing synchronization of the main radio to be acquired faster.

For example, after the gNB transmits a WUS to the WUR 411 of a specific UE, the gNB may transmit several reference signals such as tracking reference signals (TRSs) used in the existing 5G NR system in a burst manner, thereby assisting the main radio 412 to quickly acquire synchronization after waking up.

The transmission of the reference signals such TRSs by the base station in the burst manner may be explicitly indicated in the PEI.

That is, referring to FIG. 11B, early PEIs 1111 and 1121 may be information transmitted in advance before paging occasions 1141 and 1142. Therefore, when the base station transmits an indication that reference signals (e.g. TRSs) for the main radio 412 are transmitted by including it in the early PEIs 1111 and 1121, the main radio 412 may identify the indication along with the PEIs 1111 and 1121, prepare to receive the reference signals, and perform quick synchronization by receiving the reference signals transmitted in burst immediately after the PEIs.

### [D]. Synchronization signal in form of WUS

While the main radio 412 is in the sleep mode, the WUR 411 may synchronize with the base station using a synchronization signal in form of a WUS. For example, the WUR 411 may use the WUR beacon and WUR discovery frame of cases A and B of Chapter 5 as synchronization signals. This will be described based on an example with reference to FIG. 13.

In the present disclosure, it has been described that the WUR beacon and WUR discovery frame are transmitted as shown in FIG. 13 described above. In this case, in the present disclosure, the synchronization sequence 1310 may be used as a synchronization-dedicated signal to reduce signal transmission overhead.

The WUR 411 may use the synchronization sequence 1310 of the WUR beacon and WUR discovery frame transmitted in form of a WUS as a synchronization signal.

Therefore, even when the base station transmits the WUR beacon frame and/or WUR discovery frame as is, the WUR 411 may perform synchronization with the base station using only the synchronization sequence 1310 in the WUR beacon frame and/or WUR discovery frame.

A WUS generated by removing the data payload from the WUR beacon or WUR discovery frame, and including only the synchronization sequence may be used as the synchronization-dedicated signal. In other words, this type of signal is a signal only for the purpose of synchronization, and has an advantage of being small in size because it includes only the synchronization sequence. In the following description, the WUS optimized for use as a synchronization signal will be referred to as a 'low power-synchronization signal'.

In order to identify from which cell the low-power synchronization signal is received, the low-power synchronization signal may be configured to include only the synchronization sequence, a payload including only a cell ID, and a CRC for the payload. Additionally and/or alternatively, a specific RNTI for the synchronization signal may be assigned, and the CRC may be scrambled with the RNTI so that the WUR 411 identifies that the corresponding WUS is the low-power synchronization signal. In this case, the WUR 411 may identify the synchronization signal for a specific cell, and use it for synchronization.

### [E]. Measurement configuration for WUR

Even while the UE's main radio 412 is in the sleep mode, the WUR 411 may receive WUR beacon frames and/or WUR discovery frames or low-power synchronization signals. Therefore, in the present disclosure, the WUR 411 may perform measurements on a serving cell and neighbor cells by receiving the WUR beacon frames and/or WUR discovery frames or low-power synchronization signals and measuring reception signal strengths.

In addition, the base station may configure a period in which the UE's WUR 411 performs measurements on the serving cell using a WUS signal through an RRC setup procedure with the main radio 412. In the following description, this will be referred to as a 'WUS based measurement timing configuration (WMTC)'.

The base station may configure time information, such as a periodicity at which the corresponding signal is transmitted, so that the WUR 411 may perform measurements using the WUS periodically transmitted, such as the WUR beacon frame. Based on information on the transmission periodicity of the WUR beacon frame configured by the base station, the WUR 411 of the UE may perform measurement of the serving cell based on the WUS during the time period in which the WUR beacon frame is transmitted.

In addition, the UE's WUR 411 may receive WUR-Beacon frames, WUR-Discovery frames, etc. of neighbor cells and perform measurements on the neighbor cells. When measuring the neighbor cells, the UE's WUR 411 may perform measurements on the neighbor cells in a frequency channel band different from that of the serving cell. While measuring signals received from the neighbor cells in the different frequency band for the neighbor cells, the UE's WUR 411 may not be able to receive the WUS transmitted by the serving cell. Therefore, the UE's main radio 412 may configure time information such as the periodicity for the period in which the WUR 411 performs measurement using WUSs in the different frequency band in advance with the gNB, thereby preventing the gNB from transmitting a WUS while the WUR 411 performs measurements on the neighbor cells. In the following description, the period in which the serving cell does not transmit a WUS will be referred to as a measurement gap.

The WUR 411 may wake up the main radio 412 when a result of measuring a signal from a neighbor cell is equal to or greater than a preset threshold or when a result of measuring a signal received from the serving cell is less than a threshold for cell reselection. When the main radio 412 wakes up, the main radio may receive condition information for cell reselection from the WUR 411, and the main radio 412 may perform a cell reselection operation after measuring signals more accurately.

### 6. WUS retransmission method

As previously described in FIG. 10B, the base station may transmit a WUS to the UE in the RRC inactive state 1042 with the WUR mode turned on and/or in the RRC idle state 1043 with the WUR mode turned on. Thereafter, the base station may expect the UE's main radio 412 to wake up. If the UE does not wake up for a preset time, the base station may determine that the UE has not received the WUS. In this case, as a method for identifying whether the UE has woken up, the base station may identify whether an RRC establishment message or RRC resume message is received from the UE within a preset time (referred to as a 'timeout period' in the following description). For example, if the base station receives an RRC establishment message or an RRC resume message from the UE within the preset time, the base station may confirm that the UE has successfully received the WUS. On the other hand, if the base station does not receive an RRC establishment message or RRC resume message from the UE within the preset time, the base station may consider that the UE has not successfully received the WUS. If the base station determines that the UE has not successfully received the WUS, the base station may retransmit the WUS to the UE.

Meanwhile, in the above-described example, the RRC establishment message or RRC resume message has been described as being used to identify whether the UE has received the WUS transmitted by the base station. However, even when the UE performs a RACH procedure within a preset time, the base station may determine that the UE has successfully received the WUS. If it is not confirmed that the UE performs the RACH procedure within the preset time, the base station may consider that the UE has not successfully received the WUS.

On the other hand, the base station may transmit a WUS to the UE in the RRC connected state 1041 with the WUR mode turned on. In this case, if there is no message transmission from the UE even after a preset time elapses (this may include a case where there is no positive or negative response (ACK/NACK) to data transmitted by the base station to the UE on a PDSCH), the base station may consider this as a transmission failure of the WUS. The base station identifying the transmission failure of the WUS may retransmit the WUS to the UE in the RRC connected state 1041 with the WUR mode turned on.

Using the method described above, the base station may identify whether the UE has successfully received the WUS based on the operation of the UE to which the WUS has been transmitted. Therefore, the base station may identify whether the UE has successfully received the WUS without receiving a separate response signal, such as ACK, from the WUR 411. Since the WUR 411 only has a reception function, it may be essential to prevent the WUR from transmitting a response signal such as ACK.

After transmitting a WUS to a specific UE, the base station may determine (or consider) that transmission of the WUS is successful if the above-mentioned procedures are performed or data transmission is performed from the UE within a preset time.

According to the present disclosure, one UE may be woken up by transmitting a WUS, but multiple UEs may be woken up simultaneously by including a group ID or a list of multiple UE IDs in the WUS. When waking up multiple UEs in the above-described manner, there may be a case where the above-mentioned procedures are not performed from one or two or more UEs among the UEs designated by the group ID or UE ID list, or there is no uplink (UL) data transmission from the UEs. In this case, the base station may retransmit the WUS to UEs within the group that do not respond, that is, UEs within the group that do not perform an RRC establishment procedure, RRC resume procedure, or RACH procedure, or do not transmit uplink data. In this case, the WUS may be retransmitted using the group ID, or the WUS may be retransmitted to individual UEs.

In the present disclosure, when retransmitting the WUS, the base station may indicate initial transmission or retransmission using one bit reserved in the data payload of the WUS to indicate whether the transmitted WUS corresponds to initial transmission or retransmission. As a scheme of indicating initial transmission or retransmission in the data payload, a MAC CE for the data payload or L1 signaling in the WUS may be used. That is, retransmission information may be indicated as one bit in L2 or L1 of the WUS.

In the present disclosure, a time required for the WUR 411 of a specific UE to wake up the main radio 412 of the UE and the transmission of the main radio is enabled will be referred to as a 'wake up delay'. The base station may receive information on the wakeup delay from the UE by using a UE capability enquiry message of the RRC layer. The base station may reflect the information on the wakeup delay received from the UE in determining a time out duration for determining retransmission of the WUS for the specific UE. Therefore, after transmitting a WUS to the specific UE, the base station may determine a transmission failure of the WUS if there is no response from the UE within the timeout duration determined based on the wake-up delay of the UE, and schedule retransmission therefor.

### 7. WUS data payload format

Hereinafter, a format of the data payload 512 of the WUS 510 previously described in FIG. 5 will be described.

### [A]. UE ID

As described above, important information included in the WUS may include a UE ID or UE group ID for designating UE(s) to be woken up. In a specific case, a base station (or cell) may wake up all UEs within its coverage using a broadcast ID to wake up all UEs within its coverage. The UE ID, UE group ID, and/or broadcast ID may be signaled using a MAC CE or L1 signaling (a form similar to DCI).

In the present disclosure, a 5G-S-temporary mobile subscription identifier (5G-S-TMSI) configured as 48 bits may be used as the UE ID. The 5G-S-TMSI may be an identifier that uniquely identifies a UE for all of the RRC connected state, RRC inactive state, and RRC idle state for the UE.

When using the 5G-S-TMSI with the size of 48-bits as the UE ID and transmitting a WUS to one UE, the data payload 512 of the WUS illustrated in FIG. 5 may be used. However, when attempting to wake up multiple UEs by including multiple UE IDs in one WUS, there is a problem that the size of the data payload 512 becomes very long. For example, when transmitting a WUS including multiple UE IDs to wake up 5 UEs, the length of the data payload 512 may be as long as 240 bits (=48*5). Therefore, a second exemplary embodiment of the present disclosure additionally proposes a method of using a 16-bit CRC of the 5G-S-TMSI as the UE ID. When using a 16-bit CRC based on the 5G-S-TMSI, a collision may occur between UE IDs. However, even if a collision between UE IDs occurs in the WUS, there may be no major problem in system operations other than some power consumption in the corresponding UE.

In addition, in the above description, the case where the 5G-S-TMSI is used as the UE ID has been described as an example. However, instead of the 5G-S-TMSI, an international mobile subscriber identity (IMSI) or international mobile equipment identity (IMEI) may be used.

In addition, when using multiple UE IDs or UE group IDs in one WUS, the base station may arrange the UE IDs or UE group IDs in the data payload 512 in order of the UE IDs or UE group IDs, and transmit them by including them in a MAC CE. When the UE IDs or UE group IDs are delivered through the MAC CE as being sorted in the order of the UE IDs or UE group IDs, the UE receiving it may easily check whether its UE ID or group ID is included without checking the entire list. That is, for example, in a case where the UE ID list is configured in ascending order, the WUR 411 may sequentially read the UE ID list, and if it reads a UE ID with a value greater than its own UE ID without identifying its own UE ID in the UE ID list, the UE may determine that itself is not included in the UE ID list, and early terminate reception of the WUS.

On the other hand, a UE in an the RRC connected state may use a 16-bit cell radio network temporary identifier (C-RNTI), and a UE in the RRC inactive state may use an inactive radio network temporary identifier (I-RNTI) (by specifying a 40-bit I-RNTI, 24-bit I-RNTI, or 16-bit CRC of the I-RNTI value). However, since these identifiers have a dependency on the RRC states, it may be preferable to use the 5G-S-TMSI as the UE ID when delivering multiple UE IDs through one WUS.

When multiple UEs are woken up with a WUS, rather than waking up UEs in the RRC inactive state, RRC idle state, or RRC connected state using a single WUS, a different WUS may be transmitted for each RRC connection state. When a different WUS is transmitted for each RRC connection state, a WUS may be transmitted using the I-RNTIs as the UE IDs for UEs in the RRC inactive state, a WUS may be transmitted using the 5G-S-TMSIs or 16-bit CRC values of 5G-S-TMSI therefor as the UE IDs for UEs in the RRC idle state, and a WUS may be transmitted using the C-RNTI as the UE IDs for UEs in the RRC connected state.

In addition, in case of the UE group ID, an ID of 16 bits or 48 bits may be defined and used. In this case, assigning or removing a specific UE to or from a specific group may be performed using an RRC setup request or RRC reconfiguration procedure. As another example, a MAC CE may be defined to perform a procedure of assigning or removing a specific UE to or from a specific group.

When configuring a specific UE group, it may be preferable to assign UEs with similar data transmission periodicities to one group, and they may be grouped into different groups if data transmission patterns therefor change. In this case, one UE may be grouped to belong to multiple groups.

The broadcast ID described above may have a fixed size of 16 or 48 bits in length, and may be used to wake up all UEs in the coverage of the base station at once. The broadcast ID may be used for purposes such as transmission for emergency or warning.

### [B]. MAC CE format

The data payload 512 of the WUS according to the present disclosure may be signaled through a MAC CE.

FIG. 15 is a conceptual diagram illustrating a subheader structure of a MAC CE for a WUS.

Referring to FIG. 15, a subheader structure of a MAC CE is illustrated when signaling the data payload 512 of the WUS 510 using the MAC CE. In FIG. 15, each of the first and second octets may consist of 8 bits.

The first octet may include a reserved (R) field, a format (F) field, and a logical channel ID (LCID) field. The F field may indicate whether the length of a length (L) field has a size of 8 bits or 16 bits. In the present disclosure, the F field may be set to 0 to use the length of the L field as 8 bits, and the LCID field may use one of reserved LCID values for downlink-shared channel (DL-SCH) to indicate WUR activation according to the present disclosure. The second octet may consist of the L field. The L field may specify the length of the MAC CE. The MAC CE octets may be included below the MAC CE subheader illustrated in FIG. 15.

FIG. 16 is a conceptual diagram illustrating a structure of a MAC CE format for a WUS according to a first exemplary embodiment of the present disclosure.

Referring to FIG. 16, a case in which a MAC CE is configured with a plurality of octets is illustrated. One UE ID or one group ID may have a length of at least 16 bits, as described above. Therefore, in FIG. 16, octets 1 to 2 may indicate one UE ID, one UE group ID, or broadcast ID.

In case of using the format of FIG. 16, a WUS may be transmitted to wake up two or more UEs at the same time, and when a UE ID list is specified, the MAC CE may be configured in form of including a UE ID #1 indicating a first UE to receive the WUS, a UE ID #2 indicating a second UE to receive the WUS, and the like.

When waking up multiple UEs belonging to a UE group at the same time, a group ID may be specified in the WUS. When waking up multiple UE groups, the MAC CE may be configured in form of including a UE group ID #1 indicating a first UE group to receive the WUS, a UE group ID #2 indicating a second UE group to receive the WUS, and the like.

If all UEs within the coverage of the base station need to be woken up as described above, the MAC CE may be configured to include a broadcast ID configured to wake up all UEs.

FIG. 16 illustrates that the length of the MAC CE may vary depending on the number of UEs and/or the number of UE groups that need to receive the WUS. The number of IDs included in the MAC CE may be known from length information indicated by the L field described above in FIG. 15. That is, since one ID entry uses 16 bits or 48 bits, it is possible to know how many entries are included from information on the length of the MAC CE indicated by the L field.

On the other hand, when using UE IDs of different lengths depending on the RRC states, that is, the RRC connected state, RRC inactive state, or RRC idle state, a UE ID type field may be added to each entry. That is, the C-RNTI may be used as the UE ID for the RRC connected state, the I-RNTI may be used as the UE ID for the RRC inactive state, and the 5G-S-TMSI may be used as the UE ID for the RRC connected sate, respectively. In this case, since the length of the ID varies, the UE ID type field may be additionally included. In this case, by indicating the total number of entries at the very beginning of the MAC CE, the WUR may be able to decode it even if the types and lengths of the UE IDs vary depending on the RRC states.

In addition, when transmitting a broadcast ID according to the present disclosure, the length of the MAC CE may be 2 octets. In this case, since all UEs within the coverage of the base station need to wake up, there is no need to indicate an additional ID.

As described above, when the 48-bit 5G-S-TMSI is used as the UE ID, each UE may be identified globally, so there is no problem of UE ID collision with neighbor base stations. However, when using another type of UE ID, for example, an abbreviated 16-bit UE ID as described above, each UE ID may not be unique. Therefore, if an abbreviated form of UE ID or an abbreviated form of UE group ID is used, a conflict problem may occur with the UE ID of a UE belonging to a neighbor base station. In the above-described example, only the UE ID and UE group ID have been mentioned, but if the broadcast ID is used as being abbreviated, the same problem may occur. To prevent this, in the present disclosure, an additional cell ID may be added to the MAC CE. The cell ID may use an NR cell global identity (NCGI) or a physical cell identity (PCI).

In the above description, the purpose of using the UE ID or UE group ID in the WUS to identify the UE or UE group to be woken up has been described. However, the WUS may be used not only for indicating the UE ID or UE group ID indicating UE(s) that need to be woken up, but also for a purpose of the WUR beacon frame and/or WUR discovery frame described above.

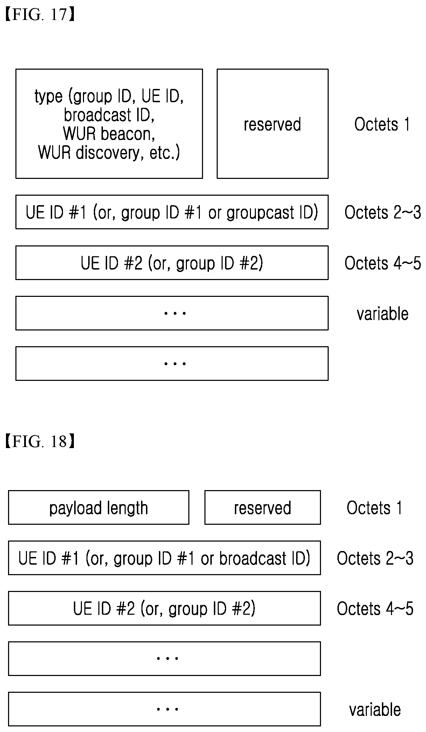

FIG. 17 is a conceptual diagram illustrating a structure of a MAC CE format for a WUS according to a second exemplary embodiment of the present disclosure.

Referring to FIG. 17, type information may identify the type of information included in the MAC CE by allocating, for example, 4 bits of the octet 1. As described above, the type information included in the MAC CE may indicate one of the UE ID, UE group ID, broadcast ID, WUR beacon, or WUR discovery.

When the type information indicates that the broadcast ID is included, the length of the MAC CE may be 3 octets. In addition, when the type information indicates the WUR beacon or WUR discovery, the MAC CE may not include the UE ID and group ID, but may include the cell ID, synchronization information, system information update information, etc. described previously in FIG. 13.

A method of allowing the LCID of the subheader to have a different value for each type without using the type information field may be used. In this case, the type and reserved fields in FIG. 17 may be omitted.

When using a 48-bit 5G-S-TMSI as the UE ID, the UE ID may uniquely identify the UE, and thus there is no UE ID collision problem with neighbor base stations. However, when using another form, for example, an abbreviated 16-bit UE ID as described above, the UE ID may not be unique. Therefore, a conflict problem may occur with a UE located in a neighbor base station, group allocated by a neighbor base station, or broadcast ID of a neighbor base station. To prevent this, in the present disclosure, an additional cell ID may be added to the MAC CE as described above. The cell ID may use a NCGI or PCI as previously described.

### [C]. L1 signaling method

The data payload 512 of the WUS according to the present disclosure may be signaled through L1 signaling rather than the MAC CE. For example, a method of defining a format in similar form to L1 downlink control information (DCI) may be used. An advantage of using the above-described method is that the WUR 411 does not need to implement MAC-related functions.

The actual content of information signaled through L1 signaling in form of DCI may be similar to the content of the MAC CE. This will be described with reference to FIG. 18.

FIG. 18 is a conceptual diagram illustrating a format when signaling a WUS through L1 signaling.

It can be seen that the WUS illustrated in FIG. 18 has a similar form to the format of the MAC CE previously described in FIG. 16.

Referring to FIG. 18, a payload length field may indicate the length of the pay load of the WUS using some bits (e.g. 5 bits) of the first octet. The number of UE IDs or group IDs included in the WUS may be identified from this field. The remaining bits of the first octet may corresponding to reserved bits.

In order to distinguish which type of information is included in L1 signaling among the UE group ID, UE ID, broadcast ID, WUR beacon, or WUR discovery, a method of explicitly indicating the corresponding type information in the reserved field of FIG. 18 may be used.

As another method, in the present disclosure, a method of using a different RNTI for each type may be used to distinguish which type of information is included in L1 signaling among the UE group ID, UE ID, broadcast ID, WUR beacon, or WUR discovery. For example, by scrambling a CRC of the data payload with a different RNTI corresponding to each of the UE group ID, UE ID, broadcast ID, WUR beacon, and WUR discovery, type of information included in the transmitted WUS may be identified.

This will be described in more detail through an example. When the information included in the data payload constituting the WUS is the UE group ID, the CRC of the data payload may be scrambled using a GWUS-RNTI (group ID wake-up signal RNTI), and when the information included in the data payload constituting the WUS is the UE ID, the CRC may be scrambled using an IWUS-RNTI (UE ID wake-up signal RNTI).

When the information included in the data payload constituting the WUS is the broadcast ID, the CRC may be scrambled using a BWUS-RNTI (broadcast ID wake-up signal RNTI). When the information included in the data payload constituting the WUS is the WUR beacon, the CRC may be scrambled using a BCWUS-RNTI (beacon wake-up signal RNTI), and when the information included in the data payload constituting the WUS is the WUR discovery, the CRC may be scrambled using a DWUS-RNTI (discovery wake-up signal RNTI).

It should be noted that the mapping between each RNTI and transmitted information described above is merely illustrative of one exemplary embodiment and the present disclosure is not limited thereto. In other words, the above RNTIs may be mapped to different information, and the CRC of the WUS may be scrambled using one of other RNTIs not illustrated above.

Meanwhile, when UE IDs are included in the WUS illustrated in FIG. 18, if all UE IDs are included in the WUS, the length of the WUS may become significantly longer. Therefore, as described previously, an abbreviated UE ID of 16 bits may be used.

Further, when a 48-bit 5G-S-TMSI is used as the UE ID, the UE may be uniquely identified, and thus there may be no conflict problem with UE IDs belonging to neighbor base stations. However, as described above, when using the abbreviated UE ID, the UE ID is not unique, and thus a collision problem with a UE ID belonging to a neighbor base station may occur. Therefore, in the present disclosure, a cell ID may be additionally included in the L1 format to prevent such collision. If a cell ID is included, the cell ID may use an NCGI or PCI.

On the other hand, in case of the WUR beacon and WUR discovery, the UE ID and UE group ID may not be included, and the cell ID, synchronization information, system information update information, etc. described previously in FIG. 13 may be included.

On the other hand, as a method of delivering the payload of the WUS, a method of delivering the same information as in FIG. 18 using RRC signaling may be used.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a terminal, comprising:
receiving a wake-up signal (WUS) indicating whether to turn on a main radio in a state in which the main radio is turned off and a wake-up receiver (WUR) is turned on;
identifying whether at least one of a terminal identifier (user equipment (UE) ID) indicating the terminal or a group identifier (UE group ID) of a group to which the terminal belongs is included in the WUS; and
waking up the main radio when the UE ID or the UE group ID is included in the WUS,
wherein the WUS includes a first synchronization sequence, a first data payload including at least one of the UE ID or the UE group ID, and a first cyclic redundancy check (CRC) generated using the first data payload.

2. The method according to claim 1, wherein the UE ID is one of an inactive radio network temporary identifier (I-RNTI) or a 5G-S-temporary mobile subscription identifier (5G-S-TMSI).

3. The method according to claim 1, further comprising:
receiving, from the base station, a paging early indication (PEI) when the main radio is woken up by the UE group ID;
identifying whether paging monitoring of the UE is indicated by the PEI;
receiving a paging physical downlink control channel (PDCCH) in a paging occasion when the paging monitoring of the UE is indicated by the PEI;
identifying whether the UE ID is included in a paging message decoded from a physical downlink shared channel (PDSCH) scheduled by the paging PDCCH; and
in response to that the paging message includes the UE ID and the terminal is in a radio resource control (RRC) idle state, transitioning to an RRC connected state through a random access channel (RACH) procedure and an RRC establishment procedure with the base station.

4. The method according to claim 3, further comprising: in response to that the paging message includes the UE ID and the terminal is in an RRC inactive state, transitioning to an RRC connected state through a RACH procedure and an RRC resume procedure with the base station.

5. The method according to claim 3, further comprising: transitioning the main radio to a sleep mode when the paging monitoring of the UE is not indicated by the PEI.

6. The method according to claim 1, further comprising:
in response to the main radio waking up, receiving a synchronization signal block (SSB) from the base station;
performing time and frequency synchronization with the base station based on the SSB; and
updating system information on the base station based on system information included in the SSB.

7. The method according to claim 1, further comprising:
receiving a SSB from the base station when the main radio wakes up in an RRC idle state according to the UE ID;
performing time and frequency synchronization with the base station based on the SSB;
updating system information on the base station based on system information included in the SSB; and
transitioning to an RRC connected state through a RACH procedure and an RRC establishment procedure with the base station.

8. The method according to claim 1, further comprising:
providing synchronization information for time and frequency synchronization between the base station and the WUR to the main radio after waking up the main radio; and
performing communication between the main radio and the base station based on the synchronization information.

9. The method according to claim 1, further comprising:
receiving discontinuous reception (DRX) information of the WUR while the terminal is in an RRC connected state; and
turning off the WUR for a predetermined time period based on the DRX information of the WUR while the main radio is in an off state.

10. The method according to claim 1, further comprising:
receiving a beacon frame transmitted by the base station at a preset periodicity;
performing time and frequency synchronization between the base station and the WUR based on the received beacon frame; and
identifying system information of the base station included in the received beacon frame,
wherein the beacon frame includes a second synchronization sequence, a second data payload, and a second CRC generated using the second data payload, the second data payload including at least one of a cell ID of the base station, synchronization information for time and frequency synchronization between the base station and the WUR, or information related to update of system information on the base station.

11. The method according to claim 10, further comprising:
receiving a beacon frame or discovery frame transmitted by a neighbor cell; and
determining whether to reselect a cell based on information included in the beacon frame or discovery frame,
wherein the discovery frame includes cell reselection-related information.

12. The method according to claim 1, further comprising:
receiving a first reference signal (RS) immediately after the main radio wakes up; and
performing synchronization between the base station and the main radio based on the first RS.

13. A method of a base station, comprising:
generating a wake-up signal (WUS) to wake up a main radio of a terminal in which the main radio is turned off; and
transmitting the WUS to the terminal,
wherein the WUS includes a first synchronization sequence, a first data payload including at least one of a user equipment identifier (UE ID) indicating the terminal or a UE group ID of a group to which the terminal belongs, and a first cyclic redundancy check (CRC) generated using the first data payload.

14. The method according to claim 13, wherein the UE ID is one of an inactive radio network temporary identifier (I-RNTI) or a 5G-S-temporary mobile subscription identifier (5G-S-TMSI).

15. The method according to claim 13, further comprising: transmitting discontinuous reception (DRX) information of the WUR while the terminal is in a radio resource control (RRC) connected state.

16. The method according to claim 13, further comprising:
generating a first reference signal (RS) including synchronization-related information; and
transmitting the first RS to the terminal at a preconfigured time immediately after transmitting the WUS.

17. The method according to claim 13, further comprising: transmitting a beacon frame at a preset periodicity, wherein the beacon frame includes a second synchronization sequence, a second data payload, and a second CRC generated using the second data payload, the second data payload including at least one of a cell ID of the base station, synchronization information for time and frequency synchronization between the base station and the WUR, or information related to update of system information on the base station.

18. The method according to claim 17, wherein the information related to update of system information is version information of the system information.

19. The method according to claim 13, further comprising:
generating a discovery frame including cell reselection-related information; and
transmitting the discovery frame,
wherein the cell reselection-related information includes at least one of a cell ID of the base station or information on a minimum quality level of the base station.

20. A terminal comprising:
a main radio unit for communicating with a base station;
a wake-up receiver (WUR) for receiving a wake-up signal (WUS) indicating whether to turn on the main radio; and
a processor,
wherein the processor causes to the terminal to perform:
receiving the WUS through the WUR;
identifying whether at least one of a terminal identifier (user equipment (UE) ID) indicating the terminal or a group identifier (UE group ID) of a group to which the terminal belongs is included in the WUS; and
waking up the main radio when the UE ID or the UE group ID is included in the WUS,
wherein the WUS includes a first synchronization sequence, a first data payload including at least one of the UE ID or the UE group ID, and a first cyclic redundancy check (CRC) generated using the first data payload, and
wherein the UE ID is one of an inactive radio network temporary identifier (I-RNTI) or a 5G-S-temporary mobile subscription identifier (5G-S-TMSI).
